Europäisches Patentamt

European Patent Office

Office européen des brevets

(19)

(11)     EP 1 376 958 B1

(12)     **FASCICULE DE BREVET EUROPEEN**

(45) Date de publication et mention
de la délivrance du brevet:
**20.09.2006 Bulletin 2006/38**

(51) Int Cl.:
**H04L 12/56** (2006.01)    **H04L 1/08** (2006.01)
**H04B 7/212** (2006.01)    **H04L 12/64** (2006.01)

(21) Numéro de dépôt: **03291357.6**

(22) Date de dépôt: **06.06.2003**

(54) **Methode de décision sécurisée d'un état donné d'un canal de communication pour système de transmission**

Verfahren zur sicheren Entscheidung eines gegebenen Zustandes von einem Kommunikationskanal für ein Übertragungssystem

Method of secure determination of a given state of a communication channel for a transmission system

(84) Etats contractants désignés:
**AT BE BG CH CY CZ DE DK EE ES FI FR GB GR HU IE IT LI LU MC NL PT RO SE SI SK TR**

(30) Priorité: **28.06.2002 FR 0208112**

(43) Date de publication de la demande:
**02.01.2004 Bulletin 2004/01**

(73) Titulaire: **ALCATEL**
**75008 Paris (FR)**

(72) Inventeurs:
• **Farineau, Jean**
**92300 Levallois Perret (FR)**
• **Chevallier, Emmanuelle**
**78360 Orgeval (FR)**
• **Chuberre, Nicolas**
**31170 Tournefeuille (FR)**

(74) Mandataire: **Smith, Bradford Lee et al**
**COMPAGNIE FINANCIERE ALCATEL**
**Département Propriété Industrielle**
**54, rue La Boétie**
**75008 Paris (FR)**

(56) Documents cités:
**US-A- 4 418 409        US-A- 5 020 058**
**US-A- 6 144 658**

**Description**

Le domaine de l'invention est celui des télécommunications. Plus précisément, la présente invention concerne une méthode de décision sécurisée d'un état donné d'un canal de communication dans un dispositif de décompression de données.

L'invention concerne également un système de télécommunications de données.

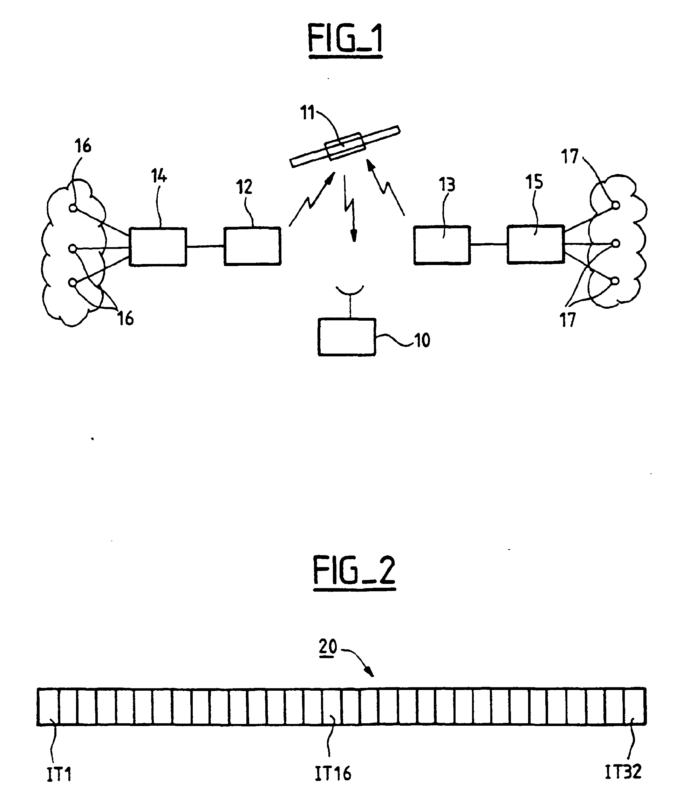

La figure 1 représente un réseau de transmission de données par satellite de type connu. Ce réseau comprend notamment un satellite 11 et un centre 10 de gestion de ressources de communications qui communique par voie hertzienne avec le satellite 11. Des stations de trafic 12, 13, comprenant des terminaux fonctionnant en mode TDMA ou SCPC, communiquent également avec le satellite 11 et sont raccordées à des centres 14, 15 de commutation téléphoniques, publics ou privés, généralement appelés PSTN pour un réseau terrestre (Public Switching Téléphone Network). Chaque PSTN 14, 15 est raccordé à une pluralité d'abonnés 16, 17.

Les communications entre les abonnés 16 et les abonnés 17 connectés à des stations de trafic différentes sont établies par le centre de gestion 10 qui alloue dynamiquement des fréquences de transmission (en mode de fonctionnement SCPC) ou des intervalles de temps d'une trame temporelle (en fonctionnement TDMA) en fonction des demandes de connexion de ces abonnés. Un tel fonctionnement est appelé DAMA ("Demand Assignment Multiple Access" en anglais) et permet, grâce à cette allocation dynamique de ressources, d'optimiser l'utilisation des ressources satellite.

Ainsi, l'affectation des ressources satellite a lieu à la demande ; lorsqu'un abonné demande une communication, et si sa demande peut être honorée, une voie du satellite est établie entre la station de trafic de départ à laquelle est connecté l'abonné demandeur et une station de trafic d'arrivée à laquelle est connecté l'abonné demandé. Le centre de gestion 10 est également informé de la libération des ressources affectées, c'est à dire en fin de communication.

Le centre 10 assure non seulement la gestion des fréquences satellite mais également la mise à disposition de modems au niveau des stations de trafic de départ et d'arrivée, afin d'établir les liaisons téléphoniques.

Le fonctionnement est généralement le suivant :

En mode de fonctionnement SCPC, le centre de gestion 10 effectue une allocation de fréquences satellite lorsqu'il détecte une prise de ligne par un abonné 16 ou 17, cette prise de ligne étant un signal analogique (fréquence particulière) ou numérique (bit ou mot de signalisation de prise de ligne) transmis par l'abonné au centre de gestion 10 par l'intermédiaire du PSTN 12 ou 13. Les stations de trafic 14 et 15 effectuent une mise en forme des signaux émis par les abonnés pour les transmettre au centre de gestion 10 par l'intermédiaire d'un modem.

Un exemple d'une telle trame est représenté à la figure 2 et référencé 20. La trame 20 est constituée de 32 intervalles de temps de 8 bits chacun, notés IT1 à IT32, le premier intervalle de temps IT1 étant dédié à la synchronisation et à des signalisations particulières, l'intervalle de temps IT16 véhiculant la signalisation de ligne issue du PSTN et les autres intervalles de temps étant réservés aux transmissions des données utiles (numérotation, données de parole,...) émises par les abonnés pour un sens de transmission. Ces abonnés sont par exemple constitués par de simples postes téléphoniques, par des autocommutateurs privés ou par un réseau téléphonique public. Chaque trame a une durée de 125 μs et permet d'assurer un débit de communication à 2 Mbps.

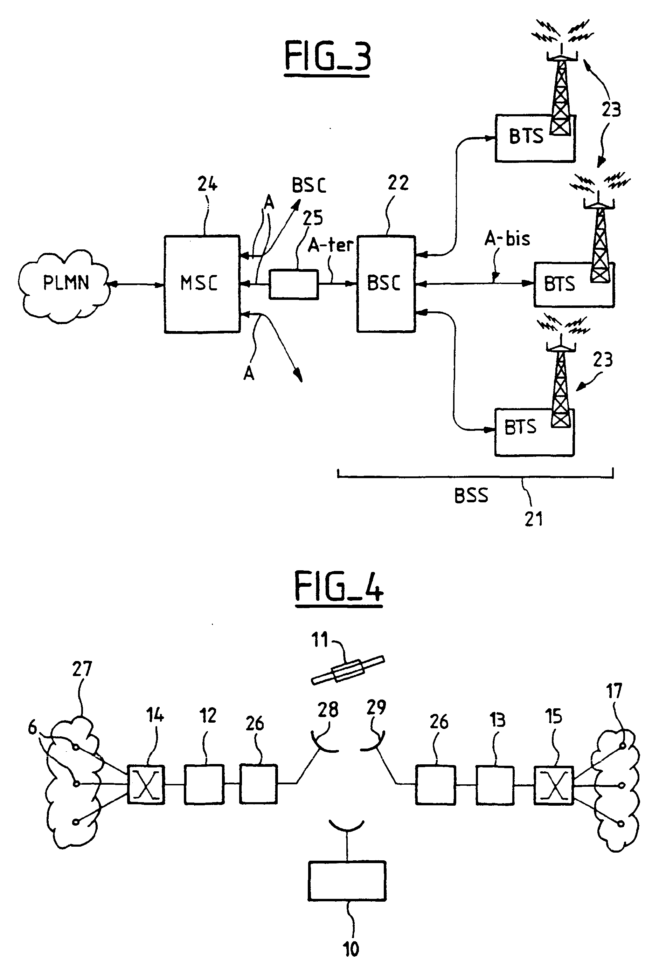

La figure 3 illustre schématiquement une partie de l'infrastructure d'un réseau GSM ("Global System for Mobile communications" en anglais). Il y est illustré le sous-système radio 21 représentant le système de stations de base ou BSS (pour "Base Station System" en anglais) gérant les relais radio émetteurs récepteurs. Un BSS se compose d'une station contrôleur 22 ou BSC (pour "Base Station Controller" en anglais) et d'une ou de plusieurs cellules et donc d'une ou plusieurs stations de base 23 ou BTS (pour " Base Transceiver Station" en anglais). Le BSC gère les ressources radio des stations BTS qui lui sont rattachées, ainsi que les fonctions d'exploitation et de maintenance des stations de base. Il assume de façon autonome les transferts intercellulaires des stations mobiles qui circulent dans sa zone de couverture. En outre, le contrôleur BSC possède, tel qu'illustré sur la figure 3, deux interfaces normalisées, l'une dénommée A-bis avec les stations de base 23 et l'autre dénommée A-ter mettant en relation le BSC avec un centre de commutation mobile 24 ou MSC (pour "Mobile Switching Centre" en anglais) via un transcodeur/unité d'adaptation de taux 25 ou TRAU (de l'anglais "Transcoder / Rate Adaptor Unit"). Celui-ci a pour objet de convertir la parole comprimée à 13 kbps en parole numérisée à 64 kbps, afin de rendre les canaux de parole compatibles du MSC. Ainsi, le couplage MSC- BSC s'opère à un débit standard de 64 kbps côté MSC, et à 16 kbps côté BSC, débit comprenant le débit de la parole comprimée à 13 kbps plus un surdébit constitué par des bits de cadrage et de bourrage. L'interface entre le MSC et le TRAU est nommé interface A ; l'interface entre le TRAU et le BSC est nommé interface A-ter.

Le TRAU 25 est compatible des différents types de signaux transmis au niveau de l'interface A-ter, et ramène à 64 kbps tous ces types de signaux. Ces signaux sont essentiellement la parole, à 16 kbps à plein débit ou à 8 kbps à débit moitié, et la signalisation à 64 kbps ou 16 kbps.

Le MSC est l'interface entre le sous-système radio BSS et un réseau filaire tel qu'un réseau 27 mobile national public ou PLMN (pour "Public Land Mobile Network" en anglais). Le MSC réalise toutes les opérations nécessaires à la gestion des communications avec les terminaux mobiles. Pour obtenir une couverture radio d'un territoire, un commutateur de réseau mobile pilote un ensemble d'émetteurs, ce qui explique la présence sur la figure 3 de plusieurs interfaces A-ter avec d'autres BSS.

L'interface A-bis effectuant la liaison entre les BTS et les BSC du système est établie via une interface synchrone E1 opérant avec un tramage de type G.703 (on parlera de trames E1). Une fraction de chaque trame porte des données utiles.

On notera que l"extension par satellite d'un réseau GSM obtenue par un déport par satellite, telle que proposée notamment dans la suite, est établie de manière indifférente soit au niveau de l'interface A-bis, soit au niveau de l'interface A-ter, soit éventuellement au niveau de l'interface A.

Quelle que soit l'interface retenue pour le déport par satellite, le nombre de canaux de transmission utilisés (intervalles de temps ou sub-divisions de ces intervalles de temps) est fixe, dépendant essentiellement de la configuration physique du BSS (nombre de BTS, nombre de porteuses). Par contre, à un instant donné, seule une partie de ces canaux de transmission est active ; leur nombre dépend de la signalisation à véhiculer, du nombre de communications établies, et de l'alternat naturellement lié au dialogue entre correspondants.

Afin de minimiser les besoins en bande passante nécessaire pour la communication satellite pour le déport, le système de télécommunications considéré pour le déport, opère en mode DAMA, c'est à dire que les ressources satellite consacrées à un instant donné pour la liaison dépendent du débit des données à transmettre, c'est à dire du nombre de canaux actifs au sein des trames à transmettre.

Les équipements qui permettent de faire du DAMA opèrent suivant deux modes différents :

- soit, ces équipements interprètent la signalisation (SS7 par exemple) afin de détecter l'activation de nouveaux canaux de transmission afin d'adapter les allocations de ressources de transmission en conséquence (variation de la bande allouée pour une liaison donnée); dans ce cas, la signalisation n'est pas une signalisation standard, et faire fonctionner le DAMA en fonction de la signalisation véhiculée serait complexe et dépendrait du fournisseur d'équipement, l'interface A-bis entre le BSC et le BTS n'étant pas standardisée,

- soit, ces équipements sont à interface de type Ethernet, ATM, voire Frame Relay. Dans ce cas, le processus de DAMA opère de manière plus simple, puisqu'il se base sur le débit moyen présent sur le canal de transmission pour ajuster les allocations de ressources de transmission. Il est à noter que dans le cas présent, le débit est invariant, car indépendant du taux d'activité des canaux à transmettre via le satellite, égal typiquement à 8 x 16 kbps par porteuse transmise par la BTS.

Ce second type de DAMA, basé sur la mesure ou la détection des variations de débit est préféré, car il permet d'éviter d'avoir à interpréter la signalisation véhiculée sur l'interface déportée pour faire varier les allocations de bande satellite. Cependant, l'interface à déporter n'étant pas directement compatible de l'équipement de transmission du système, un dispositif intermédiaire est utilisé, nommé transcodeur.

Une double nécessité s'impose pour ce transcodeur : d'une part, celui-ci doit pouvoir extraire à partir des trames synchrones les données utiles, correspondant à des canaux de transmission actifs, et celles-ci uniquement, puis les encapsuler dans des trames Ethernet, paquets IP ou cellules ATM. Ces éléments sont appliqués à l'équipement de transmission du BSC, qui peut ainsi offrir le bénéfice du DAMA.

D'autre part, le transcodeur doit également pouvoir restituter le synchronisme en bout de chaîne de transmission, dans la mesure où le processus introduit à partir des opérations d'extraction des données utiles des trames synchrones et d'encapsulation casse complètement la séquence des trames d'origine. En conséquence, le transcodeur doit permettre de reconstituer à l'identique les trames telles qu'elles étaient à la source.

Pour permettre le bénéfice des fonctionnalités de DAMA offertes par les équipements de transmission, il faut que les trames E1 soient converties en trames Ethernet, en paquet IP ou en flux ATM. Or, les transcodeurs connus permettant l'adaptation E1-Ethernet, E1-IP ou encore E1-ATM ne compriment pas les trames E1 à transmettre. Que les trames E1 portent des données valides ou non, le débit résultant est constant; ces transcodeurs ne permettent donc pas de réduire la bande passante satellite en fonction de l'activité effective des canaux de transmission du réseau GSM ; la raison pour laquelle ces transcodeurs ne tiennent pas compte de l'activité réelle des canaux transmis tient au fait qu'ils constituent des solutions de conversion d'interface physique, ils n'effectuent pas l'analyse du contenu de la trame.

Afin de résoudre les inconvénients cités ci-dessus, la Demanderesse a déposé ce jour une demande de brevet français intitulée "Compresseur, décompresseur, bloc de données et procédé de gestion de ressources". Cette demande de brevet (ci-après dénommée INV1) décrit notamment un compresseur de données provenant de trames de données d'entrée. Selon l'invention, le compresseur détecte les bits (portant un canal de communication) qui sont variants (dits "actifs") d'une trame à une autre et ne transmet que celles-ci au sein d'un bloc de données. Ce bloc contient également un code d'état localisant ces données "actives" dans la trame de départ afin de pouvoir la reconstruire.

Ce processus de compression s'établie selon une fenêtre dite d'analyse, qui contient un nombre fixé de trames d'entrée (par exemple 16, 32, 64 ou 128 trames).

Un canal est traité comme non actif ou statique dès lors qu'au cours de la fenêtre d'analyse un même motif revient périodiquement quant à son contenu. Par exemple, un tel cas se produit lorsque, pour un canal donné, c'est-à-dire pour un bit donné, le motif 1110 se reproduit par groupes de trames d'entrée en trames d'entrée. Ce motif est identifié en tant que motif de référence pour le bit considéré. Si la fenêtre d'analyse contient 16 trames (longueur de 16 trames) par exemple, on retrouve le motif 1110 se succédant à 4 reprises (donc 4 groupes) dans la fenêtre d'analyse.

A l'autre bout de la chaîne de transmission de données, on décompresse chaque bloc de données compressées en exploitant un descripteur de canaux actifs inséré dans l'entête du bloc afin de restituer la structure originelle des trames d'entrée, ceci en replaçant chaque canal à la place qu'il occupait avant la compression. Par ce biais, à partir d'un bloc de données compressées, on reconstitue N trames de sortie, identiques aux trames d'entrée ; pour les canaux dits non actifs, le dispositif de décompression opère par répétition de l'état de référence tout au long de la fenêtre courante. Cet état de référence pour chaque canal statique est tiré d'un motif de référence qui est transmis périodiquement, entre deux blocs de données par exemple.

Cependant, malgré l'ingéniosité du principe exposé ci-dessus, celui-ci peut souffrir gravement d'un défaut de transmission des bits compris dans les groupes de bits statiques de la fenêtre d'analyse.

En effet, en reprenant l'exemple ci-dessus, si la fenêtre d'analyse comprend pour un canal donné et sur 16 trames la succession de bits suivants :

1110111011101110

alors, le contenu de ce canal reproduisant au cours des 16 trames le contenu de l'état de référence pour ce bit qui est 1110, le bit sera considéré comme statique et le dispositif de décompression agira en conséquence.

Mais, si suite à un défaut de transmission, l'un au moins des 16 bits est mal transmis, l'état de référence du canal en question n'est plus reproduit à l'identique et le dispositif de décompression l'analysera comme bit actif alors qu'il ne l'est pas en réalité.

Le document **D1 = US 6,144,658** est relatif à une technique de suppression de motifs répétitifs dans un canal de voix d'un réseau de communication.

Il y est défini un signal de voix 110 comme une succession de périodes de discours (115,135 et de périodes oisives 125,145 pour lesquelles le PBX 100 envoie un motif répétitif 155 indicatif de l'état oisif du canal vocal (D1 : col. 4 lignes 8-10).

Les paquets répétitifs dont il est question dans le document D1 sont des paquets "oisifs", à savoir des paquets correspondant aux périodes "oisives" des signaux vocaux ou encore sans discours.

L'invention vise donc à remédier à ce problème majeur.

A cet effet, l'invention a pour but de fournir une méthode de décision sécurisée de l'état 0 ou 1 de chaque bit d'un motif répété par un canal statique de communication dans undispositif de décompression de données destiné à décompresser un bloc de données comportant un groupe de données comprimées à partir d'un ensemble de trames de données par un dispositif de compression de données, ce groupe comportant tous les canaux actifs de l'ensemble, étant entendu que les trames étant de structure définie selon une pluralité d'intervalles temporels, un premier groupe d'intervalles temporels étant tels que chacun d'eux soit décomposé selon une pluralité de bits d'informations portant respectivement un canal de communication, et que l'état actif, respectivement statique, de chaque canal étant attribué lorsque la comparaison du contenu de ce canal dans les N bits comparés entre les N trames d'un motif de référence avec les N bits correspondants des N trames éventuellement répétés L fois, forment une fenêtre d'analyse, montre une variation de contenu pour au moins l'un des bits, respectivement une stabilité de contenu pour l'ensemble des N bits, avec N entier supérieur ou égal à 1, la méthode comportant les étapes suivantes :

- une étape de transmission d'un descripteur précisant l'état, statique ou actif, du canal de transmission,
- une étape de transmission du contenu du canal devenu statique sur les L*N trames de la fenêtre d'analyse,
- une étape d'analyse statistique, sur une fenêtre d'analyse portant sur L*N trames du bloc courant, de l'état statique dudit canal basée sur un vote majoritaire des états obtenus pour le canal considéré sur les L groupes de trames dans la fenêtre d'analyse, l'état de ce canal étant comparé pour chaque groupe à l'état du canal dans le motif de référence.

Ainsi, la décision pour un canal donné de passage en état statique est exempte d'erreurs dues à des défauts de transmission de quelques-uns des bits perturbés car cette décision se fonde sur un vote majoritaire des bits statiques.

Selon un mode de réalisation, pour chaque canal, un compteur est associé et en ce que l'étape d'analyse statistique comprend une étape d'initialisation du compteur est réalisée en début de la fenêtre d'analyse, une convention d'incrémention ou décrémentation du compteur étant établie selon les valeurs binaires successives que prend le canal au sein des L groupes, le signe de la valeur finale du compteur permettant de décider sur la valeur majoritairement représentée au sein des L groupes.

Selon un mode de réalisation, le nombre d'erreurs de transmissions de bits correspondant au canal spécifié est défini par la relation :

$$Ne = ( 1 + (NT/N) - |X|) / 2,$$

NT = L*N correspond aux nombres de trames entrant dans la composition d'une trame.

Selon un mode de réalisation, le nombre de fenêtres d'analyse pour la décision du caractère statique d'un canal varie en fonction de la qualité de transmission existant entre le dispositif de compression et le dispositif de décompression.

Selon un mode de réalisation, une information est intégrée dans une entête du bloc de données pour spécifier le nombre de fenêtres d'analyse utilisées.

Selon un mode de réalisation, cette information comporte :

- 0 si des moyens de détection d'erreurs, du type comprenant un démodulateur, mesure une qualité de liaison inférieure à un premier seuil,
- 1 si les moyens de détection mesure une qualité de liaison supérieure à ce premier seuil,
- un nombre supérieur strictement à 2 et dont l'importance croît lorsque le taux d'erreur mesuré excède une valeur déterminée (x) du rapport NT/N.

L'invention a également pour objet un système de télécommunications de données comprenant un dispositif de compression et un disposiif de décompression, caractérisé en ce qu'il est apte à mettre en oeuvre la méthode selon l'invention.

D'autres caractéristiques et avantages de l'invention apparaîtront à la lecture de la description des modes de réalisation suivants, donnés à titre illustratif et non limitatif, et des dessins annexés, dans lesquels :

la figure 1, déjà décrite, représente un réseau de transmission de données par satellite de type connu,

la figure 2, déjà déjà décrite, représente une trame issue d'un centre de commutation et appliquée à une station de traffic, selon l'art antérieur,

la figure 3, déjà décrite, illustre schématiquement une partie, comprenant le sous-système radio, de l'infrastructure d'un réseau GSM,

la figure 4 illustre un système de transmission de données par satellite selon un premier mode de réalisation de l'invention,

la figure 5 illustre l'agencement d'un dispositif d'émission/réception de signaux pour satellite au sein d'une infrastructure de réseaux cellulaires du type GSM,

la figure 6 représente la structure de trame à transmettre sur l'interface A-bis ou A-ter,

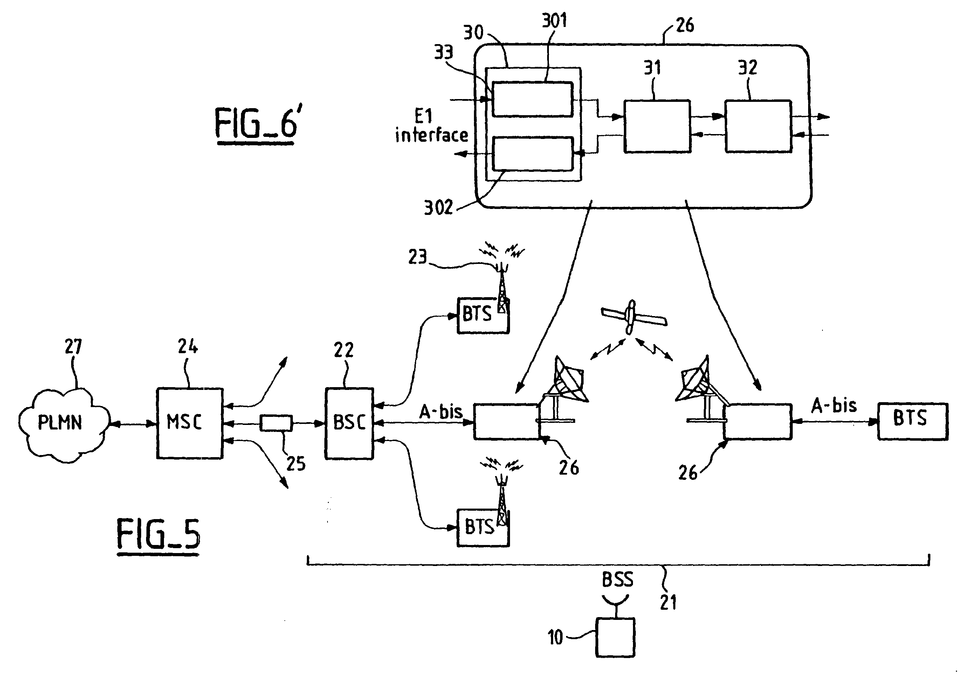

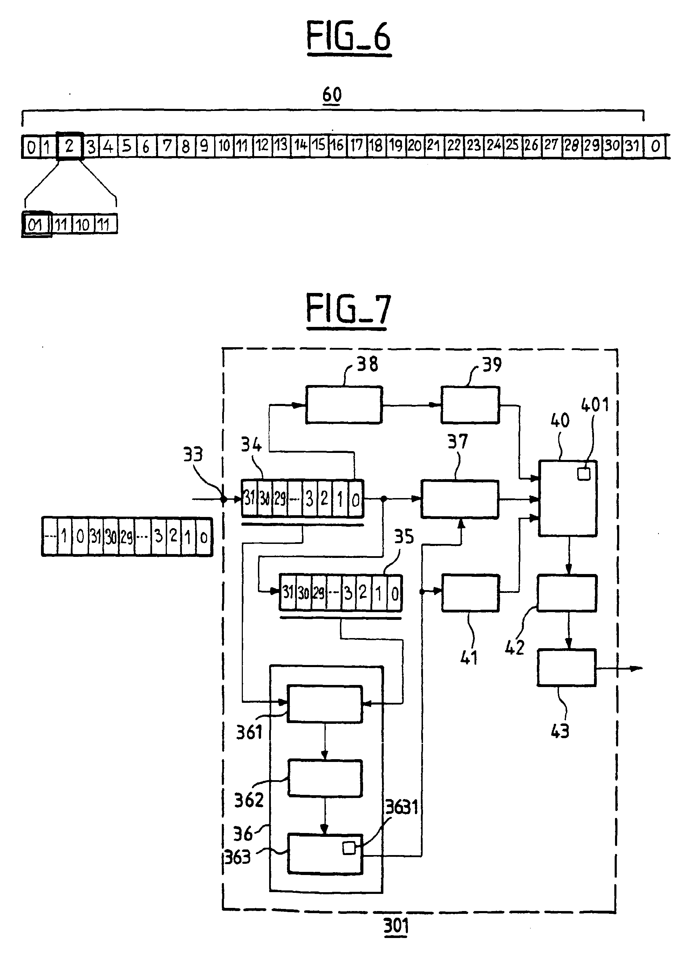

la figure 6' représente un dispositif d'émission/réception de signaux comprenant un compresseur et un décompresseur selon un mode de réalisation de l'invention décrite dans la demande de brevet de priorité de INV1, déposée par la Demanderesse référencée FR n°01 11 048, dont le contenu est intégré dans la présente demande, ci-après appelée demande de priorité de INV1,

la figure 7 illustre un dispositif de compression de trames, selon un mode de réalisation de l'invention de la demande de priorité de INV1,

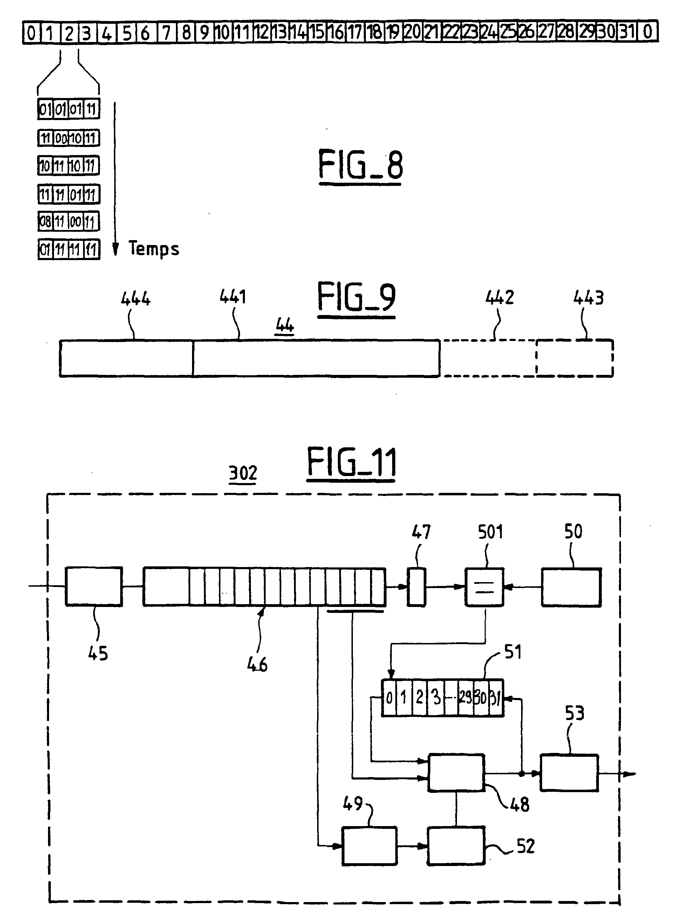

la figure 8 illustre le principe de comparaison, selon un mode de réalisation de l'invention de la demande de priorité de INV1, pour un intervalle temporel donné de son contenu sur plusieurs trames consécutives,

la figure 9 illustre la structure d'un bloc de données délivré par le bloc de restitution du compresseur selon un mode de réalisation de l'invention de la demande de priorité de INV1,

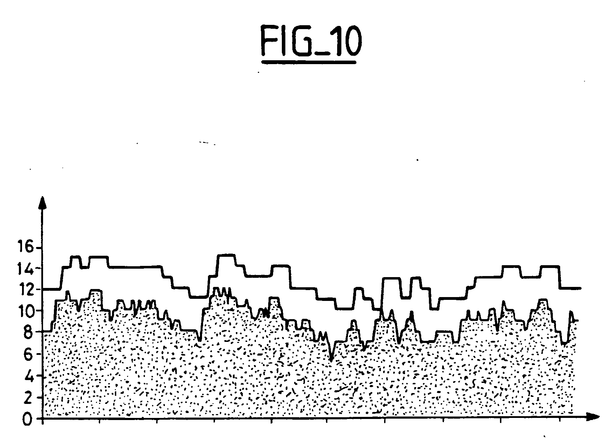

la figure 10 représente les variations de traffic sur une station de traffic pour 16 communications vocales simultanées,

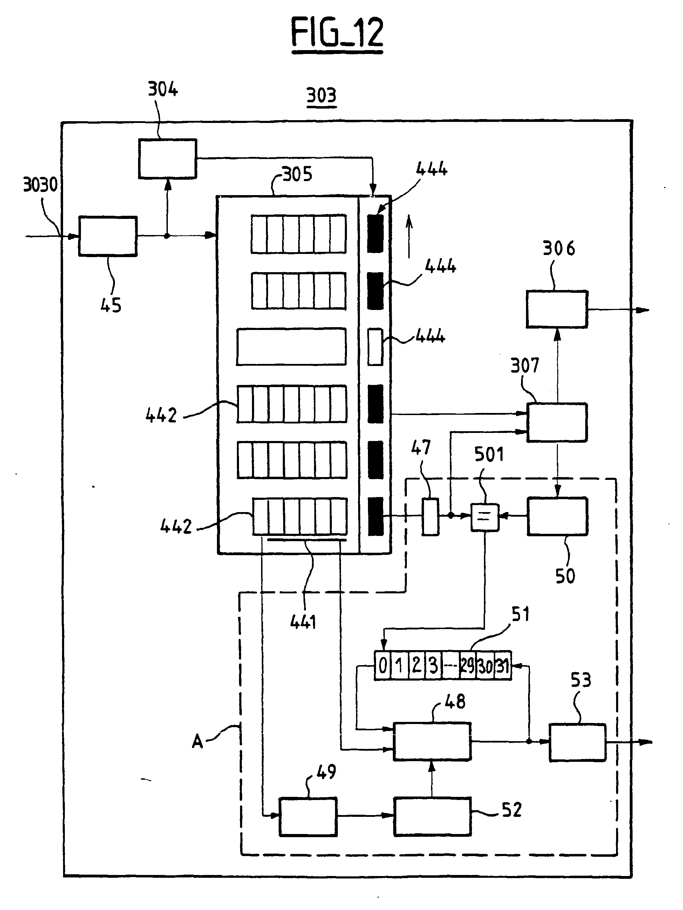

la figure 11 illustre un dispositif de décompression de blocs de données, selon un mode de réalisation de l'invention de la demande de priorité de INV1,

la figure 12 illustre une variante du dispositif de décompression de blocs de données de la figure 11,

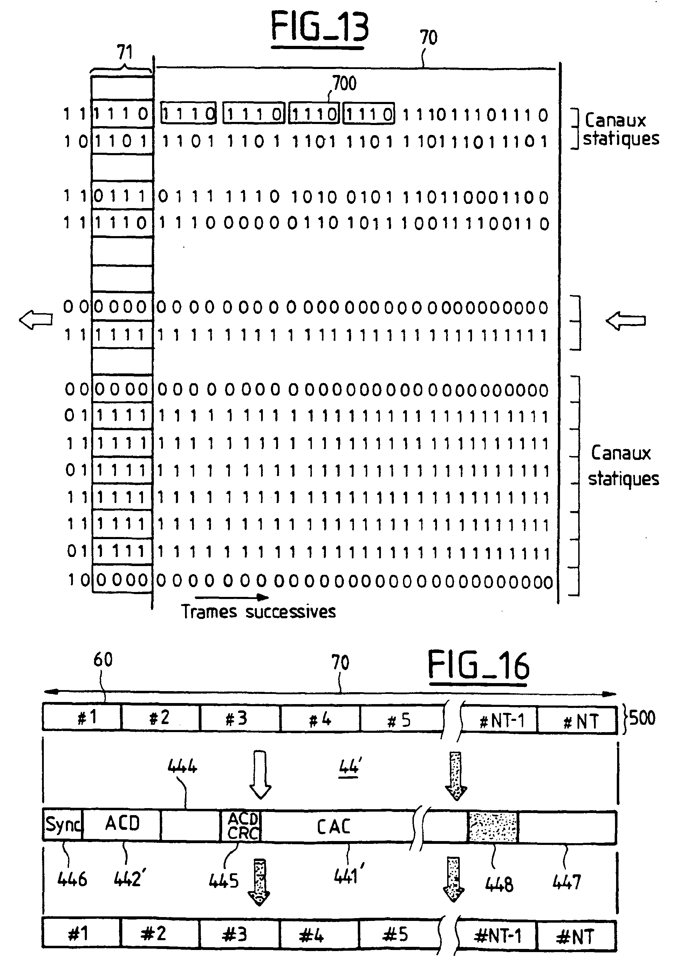

la figure 13 illustre schématiquement le principe de fonctionnement du procédé de compression selon l'invention de INV1,

la figure 14 représente un mode de réalisation du dispositif de compression selon l'invention de INV1,

la figure 15 représente un mode de réalisation du dispositif de décompression selon l'invention de INV1,

la figure 16 représente un mode de réalisation d'une trame compressée ou bloc de données compressées selon l'invention de INV1,

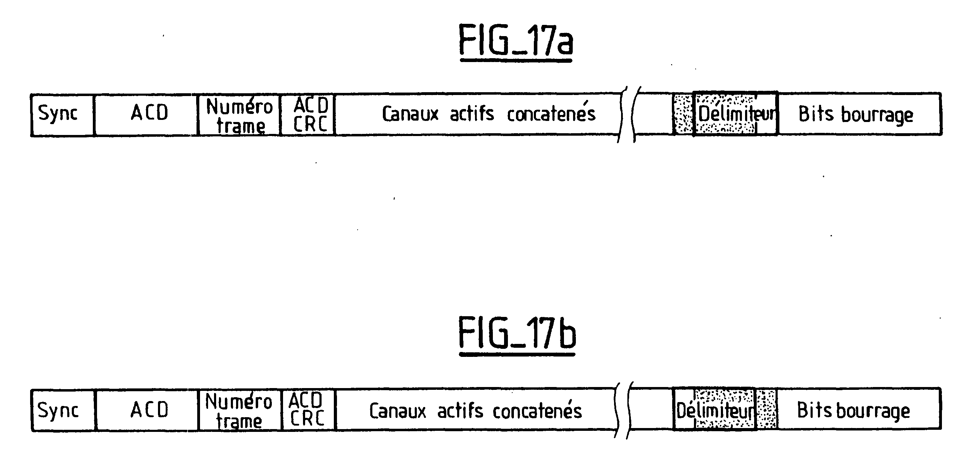

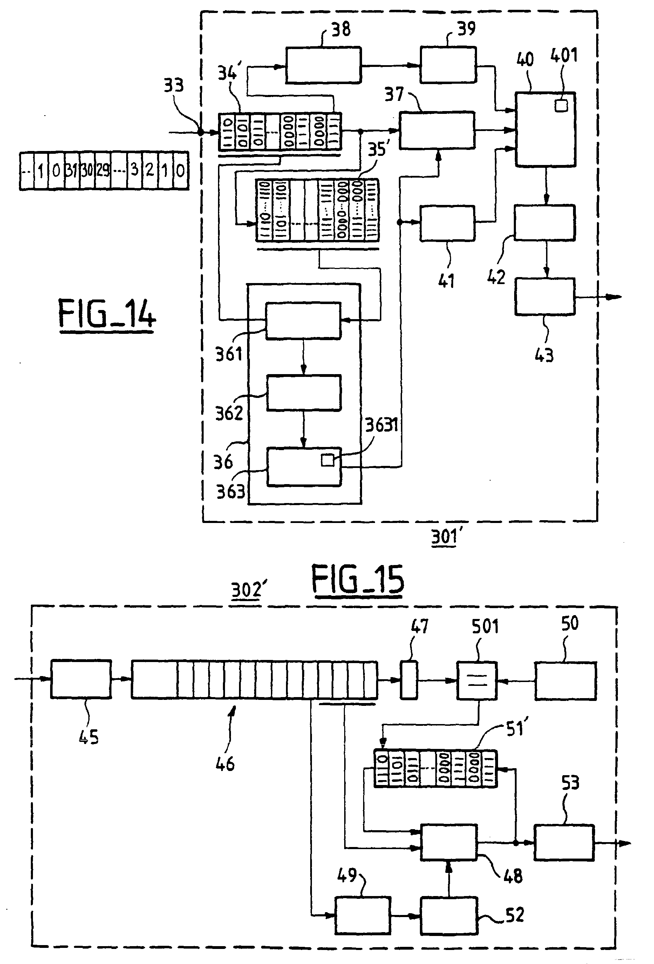

les figures 17a et 17b représentent des configurations de production d'erreurs survenues sur la trame compressée de INV1,

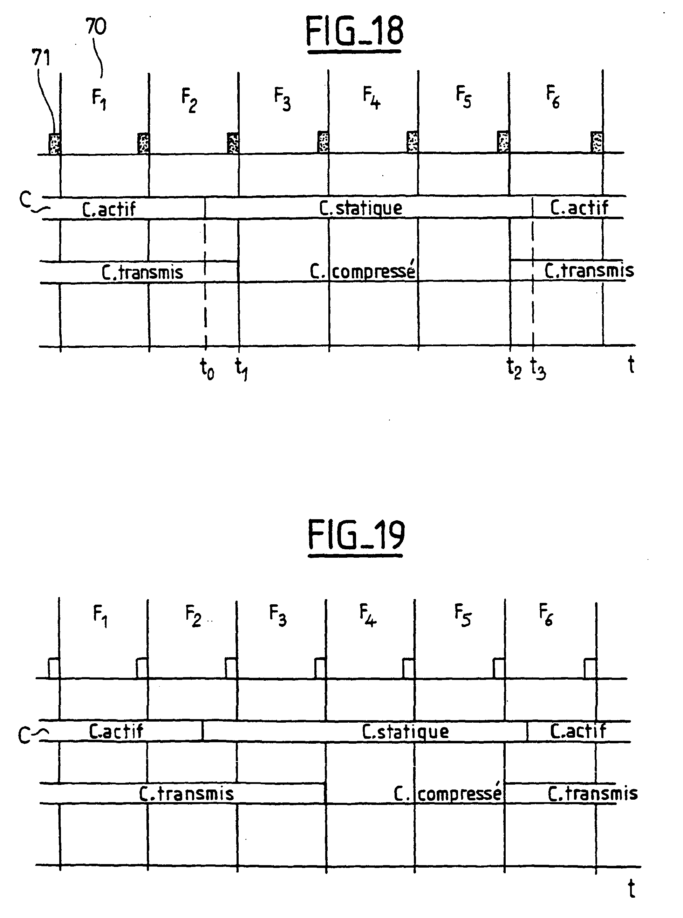

la figure 18 représente un diagramme illustrant la période d'échantillonage du motif de référence et sa transmission dans le système, les états successifs d'un canal donné et les moments où le procédé de compression selon INV1

sont enclenchés selon INV1.

la figure 19 illustre le même diagramme mais selon la présente invention.

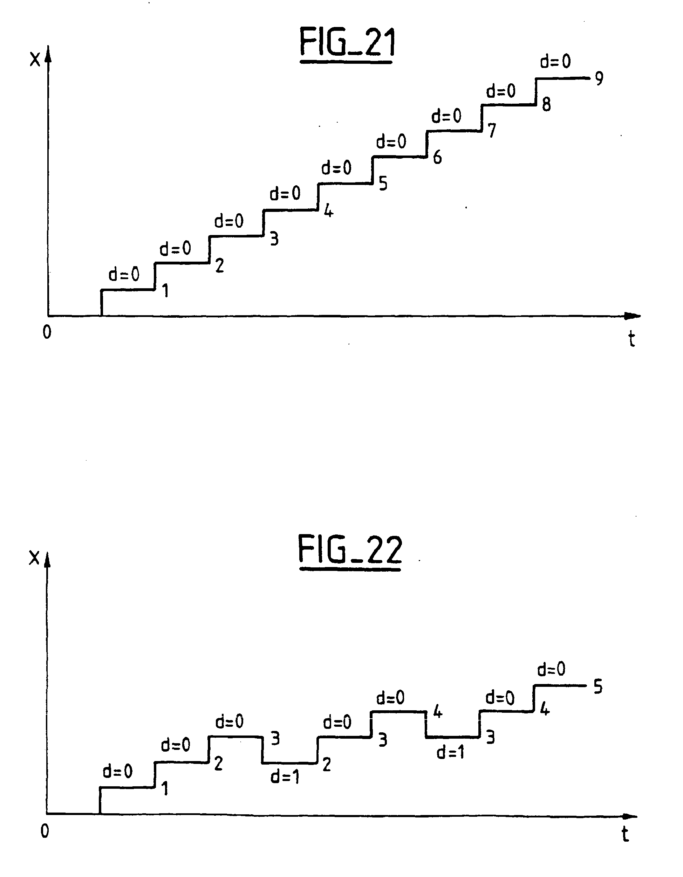

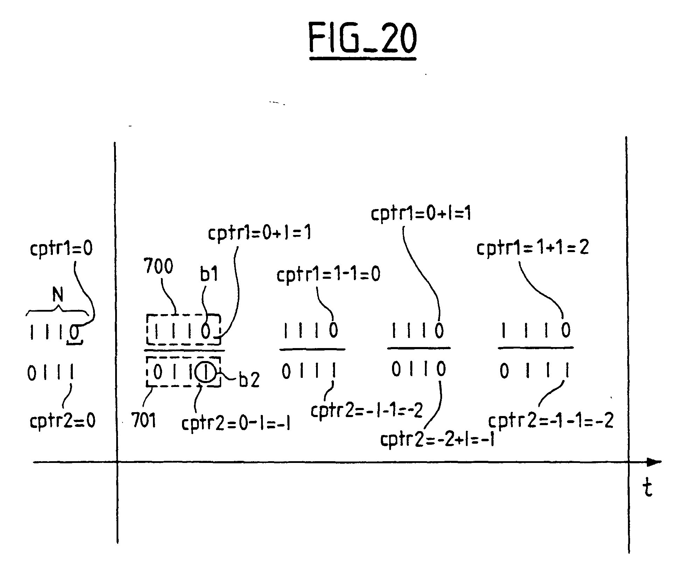

la figure 20 représente un mode de réalisation de l'analyse statistique telle que réalisée selon l'invention incorporant un ensemble de compteurs,

la figure 21 illustre l'évolution d'un de ces compteurs au cours du temps sans erreurs de transmission du canal associé,

la figure 22 représente l'évolution du même compteur avec deux erreurs de transmission sur ce canal.

Dans la présente demande, les éléments remplissant des fonctions identiques ou équivalentes porteront les mêmes références.

On notera que, nonobstant l'intégration du contenu de la demande de priorité de INV1 et de celui de INV1 pour des raisons de clarté du contexte et de leur fort intérêt, l'invention de la présente demande n'est décrite qu'à partir de la figure 18.

La figure 4 reprend les éléments du système de télécommunications de la figure 1. Le système comprend deux centres de commutation téléphonique 14, 15, chaque centre étant relié d'une part à une pluralité d'abonnés 16, 17 et d'autre part à une station de traffic 12, 13 respectivement. Les centres de commutation fournissent des trames à 2Mbits/s telles que représentées à la figure 2 et qui seront détaillées plus précisément à la figure 6 en relation à la figure 5. Chaque station de trafic 12, 13 est reliée à un dispositif 26 d'émission/réception de signaux relié respectivement à une antenne satellite 28, 29.

La figure 5 illustre l'agencement du dispositif 26 au sein d'une infrastructure de réseaux cellulaires du type GSM. On notera que le dispositif 26 peut être compris dans le BSC 22, voire être agencé sur l'interface A-ter.

Le dispositif 26 est illustré de façon plus détaillée sur la figure 6'. Il comporte un premier couple d'entrée/sortie relié à l'interface E1 connectée au BSC 22. Ce couple d'entrée/sortie est relié à un dispositif 30 de compression/décompression de trames qui sera détaillé dans la suite. Ce dispositif est par ailleurs relié à un modem 31 destiné à assurer l'émission/réception en full-duplex d'intervalles de temps, le mode de transmission étant du TDMA. Le modem 31 est relié aux entrée/sortie d'un bloc 32 de traitement radio de signaux qui est relié à l'antenne 28, 29 respectivement.

Le système comporte également, de façon connue, un centre de gestion de ressources 10, et un satellite 11 par lequel les communications entre les stations transitent.

Une première entrée du dispositif 26 est reliée à une première entrée du premier couple du dispositif 30 reliée à une entrée d'un dispositif 301 de compression de trames et fournissant un signal de sortie à une première sortie du dispositif 30 vers le modem 31 alors qu'une seconde entrée du dispositif 30 relie le modem à un dispositif 302 de décompression de trames du dispositif 30 délivrant un signal de trames décompressées vers une sortie du dispositif 26 vers le BSC. Dans la suite, dans un souci de concision, le dispositif de compression de trames sera dénommé compresseur alors que le dispositif de décompression de trames sera dénommé décompresseur.

Le compresseur 301 assure la compression des trames à transmettre et l'adaptation du format des blocs de données résultant à l'interface offert par le modem 31 en mode d'émission, à savoir une interface Ethernet, IP ou ATM.

Le décompresseur 302 assure l'adaptation à l'interface offert par le modem 31 en mode de réception (généralement identique à celui utilisé côté modem d'émission), ainsi que la restitution des trames telles qu'appliquées en entrée du compresseur.

La figure 6 illustre la structure typique d'une trame 60 à transmettre sur l'interface A-Bis ou A-ter des réseaux cellulaire du type GSM. On notera que la présente invention ne se limite pas à une telle interface et s'étend à tout autre type d'interface, notamment celles relatives à des réseaux non cellulaires.

Chaque trame se décompose en un nombre fixe d'intervalles temporels ("Time slot" en anglais), et en l'occurrence 32 intervalles de temps pour des trames E1 conformément aux recommandations G.703 / G.704 de l'ITU-T, chaque intervalle de temps portant un octet. L'intervalle de temps référencé 0 est réservé à la synchronisation de la transmission des trames, en vue de synchroniser la réception des trames du côté de l'équipement destinataire. De manière générale, la fréquence trame est de 8 kHz, ce qui permet de véhiculer 31 canaux à 64 kHz, à raison d'un canal par intervalle.

Dans le cadre présent de l'extension par satellite de réseaux cellulaires, chaque octet se décompose de la manière suivante :

- soit chaque octet comporte 4 doublets (un doublet étant un échantillon de 2 bits, appelé "nibble" en anglais), où chaque doublet porte un canal à 16 kbps ; c'est le cas notamment pour la transmission de la voie, comprimée à 16 kbps sur l'interface A-Bis et A-Ter,
- soit chaque octet transporte 8 canaux vocaux comprimés en débit moitié, chaque bit correspondant dans ce cas à un canal vocal,
- soit l'octet n'est pas subdivisé, ce qui est le cas pour la transmission des données dans le système "Global Packet Radio Service" dit GPRS (canaux de données utilisateur à 64 kbits/s) ou pour la transmission de la signalisation,

- d'autres formes alternatives peuvent exister : par exemple 2 canaux de 32 kbps, 1 canal à 32 kbps et 2 canaux à 16 kbps, etc.

La figure 7 illustre le compresseur 301 selon un mode de réalisation de l'invention de la demande de priorité de INV1.

Le fonctionnement du compresseur est décrit ci-après :

Dans un premier temps, il extrait le contenu de chaque trame. Pour cela, il se synchronise sur l'intervalle de temps de référence 0 et extrait les données présentes dans les intervalles de temps qui le suivent.

Ensuite, il effectue une compression des données extraites au sein de la trame. Ce processus dépend de la structure de chaque intervalle de temps. Deux démarches sont envisagées à cette fin :

- la structure de la trame (nombre d'intervalles temporels utilisés et position de ces intervalles temporels au sein de la trame) et la structure de chaque intervalle temporel sont définies par configuration : 4 canaux à 16 kbits/s (structure en doublets), puis 8 canaux à 8 kbits/s (structure en bits), puis 1 canal à 64 kbits/s, ...
- ou le compresseur détermine de lui-même la structure de chaque intervalle temporel par apprentissage, en analysant de manière statistique les évolutions de chaque bit et en corrélant avec les évolutions des bits voisins, afin d'identifier des corrélations dans les changements d'état ; il est convenu que la configuration de la structure des trames transmises n'évolue généralement pas, et qu'un apprentissage peut ainsi être opéré afin d'éviter d'avoir à configurer le compresseur en fonction du cas d'utilisation.

La figure 7 représente le dispositif 301 de compression de trames selon un mode de réalisation de l'invention de la demande de priorité de INV1. Le principe de compression réalisé par le compresseur est le suivant : la structure de l'intervalle temporel étant connue, le compresseur compare le contenu de l'intervalle de la trame courante par rapport au contenu de ce même intervalle sur les trames précédentes. Ce principe est schématisé à la figure 8 où il est illustré le principe de comparaison pour l'intervalle temporel de référence 2 et sur une longueur temporelle de 6 trames.

Les trames de données entrent par l'entrée 33 du compresseur 301 qui est reliée à l'entrée du premier couple d'entrée/sortie du dispositif 26. Cette entrée 33 est reliée à une mémoire tampon 34 de trames ("buffer" en anglais) mémorisant la trame courante et fonctionnant selon une logique FIFO (de l'anglais "First In First Out"). Cette mémoire tampon 34 est reliée en sortie à une entrée d'une mémoire 35 de stockage de la trame précédente à la trame courante présente dans la mémoire 34. La mémoire 34 est également reliée en sortie à une entrée d'un bloc 36 d'analyse, laquelle entrée est reliée dans le bloc 36 à un bloc 361 de comparaison. Ce bloc 361 est ainsi destiné à comparer la trame courante avec la trame précédente à celle-ci qu'il reçoit sur une seconde entrée reliée à une sortie de la mémoire 35 de stockage. Le bloc 36 d'analyse comprend également un bloc 362 de détection de variations d'état relié en entrée à la sortie du bloc 361 de comparaison et une machine d'état 363 reliée à la sortie du bloc 362 de détection et destinée à déterminer les états actif ou statique de chacun des éléments transmis (par exemple les doublets transmis), comme il sera vu ci-après. La mémoire 34 fournit également en sortie la trame courante à l'entrée d'un extracteur 37 d'éléments actifs, ce dernier étant relié en entrée à la sortie de la machine d'état 363 du bloc d'analyse. La machine d'état est reliée en sortie parallèlement à un encodeur d'état 41 destiné à fournir des codes compacts d'identification de position des éléments actifs, ceci étant réalisé de façon systématique en fonctionnement ou sur détection de changement d'état d'activité des éléments constitutifs de la trame. Enfin, la mémoire 34 est reliée en sortie à l'entrée d'un bloc 38 de synchronisation de trames dont la sortie est reliée à l'entrée d'un compteur 39 de trames. Ce compteur 39 délivre un numéro propre à la trame courante à une première entrée d'un bloc 40 de regroupement de données construisant des blocs de données regroupant des données propres à la trame courante. Le numéro fourni par le compteur 39 permet l'identification de la trame courante. Une seconde entrée du bloc 40 de regroupement est reliée à la sortie de l'extracteur 37 alors qu'une troisième entrée est reliée à la sortie de l'encodeur 41.

Le bloc 40 de regroupement construit un bloc de données selon une méthode qui sera détaillée dans la suite et fournit ce dernier en sortie à une mémoire tampon 42 de sortie. De préférence, plusieurs blocs sont concaténés dans cette mémoire 42 avant transmission à une interface physique 43 de sortie du compresseur 301 assurant l'adaptation au type d'interface utilisé pour le couplage avec le modem 31 d'émission (Ethernet, IP, ou ATM).

Le procédé de compression mis en oeuvre par le compresseur implémente les étapes suivantes :

Le bloc d'analyse 36 analyse les variations de contenu, en se basant sur la structure de la trame établie par configuration dans le cas présenté (par exemple doublet par doublet pour une trame structurée en doublets), et détecte les variations d'état. Ceci est réalisé au sein du bloc d'analyse en comparant dans le bloc de comparaison chaque doublet avec son doublet correspondant de la trame précédente au moins, le résultat étant fourni au bloc de détection 362 qui détecte et fournit des états d'activité, actif ou statique, à la machine 363, selon qu'il y a eu variation d'état du doublet ou non. Lorsqu'un doublet ne varie pas un nombre fixé de fois, par exemple trois fois (nombre de fois pouvant être beaucoup plus élevé, configurable dans la machine d'état 363), la machine d'état 363 transmet au bloc 40, via l'encodeur d'état 41, que le contenu de ce doublet n'est plus actualisé ; le doublet est alors considéré comme étant à l'état statique. Le compresseur stoppe alors la transmission du doublet concerné.

A l'inverse, dès qu'un doublet change d'état alors qu'il était détecté comme statique, la transmission de son contenu est rétablie sans délai, la machine d'état transmettant au bloc 40 via l'encodeur d'état, un code compact d'activation d'état du doublet.

Les codes qui sont transmis au bloc 40 sont représentatifs des variations d'état des éléments (en l'occurrence les doublets) et sont fonction de la structure de ces éléments. Selon une convention (qui peut être évidemment inversée ou modifiée), un 1 signale qu'un élément est actif, un 0 signale qu'un élément est statique, au sein d'une chaîne de bits représentant l'état des éléments transmis ; par exemple, pour un ensemble de deux intervalles temporels consécutifs transportant chacun quatre doublets, on pourrait avoir la combinaison suivante de codes : 1010 1111 soit AF en valeur hexadécimale. Cette suite est représentative de six doublets actifs et de deux doublets inactifs (ceux affectés du code 0). Le code indicatif de changement d'état est transmis sans délai, dès qu'un élément de la trame passe de l'état statique à l'état actif.

Afin de ne pas surcharger les trames transmises en signalisation de changement d'état, une temporisation est mise en place pour les indications de passage d'un ou plusieurs éléments de l'état actif à l'état statique. D'une part, le compresseur dispose d'une mémoire 3631 préprogrammée de la machine d'état 363 qui compte au minimum trois trames (par exemple) pour vérifier l'identicité de l'élément considéré sur les trois trames, mais en plus la mémoire tampon 42 du compresseur conserve au minimum N trames par rapport à l'indication de changement d'état précédente ; ceci permet d'espacer les signalisations de changement d'état et évite de surcharger la liaison.

A l'inverse, dès qu'un élément passe de l'état statique à l'état actif, la machine d'état est programmée de manière à transmettre de façon immédiate le code de changement d'état de la trame.

Le code de changement d'état de la trame, ou code d'état, comporte tous les codes d'état des éléments portés par la trame, uniquement pour les intervalles temporels utilisés, ces codes d'état étant élaborés selon la méthode définie ci-dessus.

Par exemple, pour une trame utilisée pour transporter deux intervalles temporels, le code 00AF délivré par l'encodeur signifie que tous les éléments du premier intervalle temporel sont statiques alors que ceux du second intervalle temporel sont actifs excepté les doublets 2 et 4 (exemple vu ci-dessus 1010 1111). De cette sorte, le code de changement d'état, dit code d'état dans la suite, sert d'indication de localisation des éléments actifs de la trame. Ce code d'état est fourni par l'encodeur 41 sur les informations d'état en sortie de la machine d'état.

Les doublets pouvant par conséquent avoir deux états exclusifs stables, respectivement statique ou actif, seuls sont transmis par le bloc de regroupement les doublets qui lui ont été signalés comme actifs, en rajoutant des bits de bourrage pour compléter le bloc de données en fonction des contraintes de l'interface utilisée. Ces bits de bourrage sont gérés par un gestionnaire 401 de bits de bourrage interne au bloc de regroupement. Ces bits de bourrage feront l'objet d'explications plus détaillées dans la suite. On remarquera qu'au lieu d'informations de bourrage non utiles, il est possible d'utiliser cet espace de la trame pour y répéter des données critiques pour la restitution efficace des trames, telles que le code d'état ou le numéro de trame.

La figure 9 illustre la structure d'un bloc de données 44 délivré par le bloc 40 de regroupement du compresseur. Le bloc 44 comprend un bloc 441 de données comprimées comportant les doublets à transmettre, un code d'état de la trame courante, par exemple 00AF. Ce code d'état est représentatif de la position des éléments actifs au sein de la trame considérée.

Pour signaler un changement d'état au dispositif de décompression à l'autre bout de la chaîne de transmission (dispositif de décompression qui sera explicité dans la suite), le compresseur ajoute par l'encodeur 41 ou le bloc 40, au code d'état de la trame courante, par exemple 00AF, un code spécifique 443 signalant la présence d'un code d'état 442 au sein du bloc, ce qui signifie que le bloc de données transmis correspond à un cas de changement d'état. Selon une variante, il n'est pas joint de codes spécifiques tels que spécifiés ci-dessus accompagnant le code d'état de la trame courante mais le décompresseur détecte l'adjonction du code d'état par analyse de la longueur du bloc de données reçues. Dès que le bloc présente une longueur différente, le décompresseur est capable d'en déduire qu'un code d'état est présent en fin de bloc.

De plus, un numéro de trame 444 est adjoint en tête du bloc de données comprimées, destiné à garantir la synchronisation de la décompression des données et la prise en compte des cas de pertes de bloc de données dans la chaîne de transmission. Ce numéro de trame est comptabilisé modulo la capacité du compteur utilisé à cet effet (8 bits ou 16 bits par exemple).

Le bloc de données ainsi constitué est encapsulé dans la trame Ethernet, le paquet IP, ou la cellule ATM, en fonction du mode de transmission adopté.

De préférence, plusieurs blocs sont concaténés dans la mémoire tampon 42 avant encapsulation afin de réduire le surdébit lié à l'encapsulation.

L'interface physique 43 de sortie assure l'adaptation au type d'interface utilisé pour le couplage avec le modem d'émission (Ethernet, IP, ATM).

On notera que l'avantage du choix du protocole IP vis à vis d'Ethernet est qu'il permet d'inclure des fonctions de routage optimisé et de reroutage automatique en cas de défaut d'une liaison.

On revient ici à une explication plus détaillée de l'intérêt des bits de bourrage énoncés ci-dessus. Pour cela, il a été illustré sur la figure 10, les variations de traffic sur une station de traffic pour 16 communications vocales simultanées en prenant en compte les périodes de silence. Ces variations suivent un profil statistique : la probabilité que les 16 canaux soient actifs simultanément est très faible, tout comme la probabilité que les 16 canaux soient silencieux simultanément ; en moyenne, on a 8 canaux actifs sur 16.

Or, le compresseur étant relié à un système de transmission par satellite qui intègre une fonction DAMA, l'allocation de ressources satellite se fait avec un rythme lent, par exemple toutes les 1,6 secondes, alors qu'au cours de ces 1,6 secondes, un nombre d'interlocuteurs vont passer du silence à la parole et que sur cette même période, il n'y en a pas nécessairement autant qui passent de la parole au silence, ce qui explique la marge supplémentaire à peu près égale à 50% entre l'allocation de canaux par le système à la station de traffic considérée et les canaux effectivement utilisés sur celles-ci. Le système d'allocation de ressources ne permettant pas en général la prise en compte automatique d'une marge, le compresseur rajoute des bits de marge destinés à simuler une occupation de ressources de transmission en excès par rapport à ses besoins effectifs. Les bits supplémentaires non utilisés pour la transmission de données utiles sont utilisés à des fins de redondance d'informations les plus critiques par exemple, code d'état ou numéro de trame. Par contre, dès que le dispositif de décompression doit transmettre plus d'éléments que lors du cycle précédent, il utilise les bits de marge pour les transmettre au détriment de la transmission d'informations redondantes, le code d'état permettant de signaler quels nouveaux éléments sont actifs. Ce processus basé sur l'utilisation de bits de marge significatifs permet de lisser la charge de la liaison utilisée et donc d'adapter le dispositif de compression/décompression selon l'invention de la demande de priorité (INV1) à l'inertie que présente le mécanisme d'allocation de ressources utilisé de façon classique, tout en évitant de transmettre des bits sans aucune utilité. Il est à noter que plus le cycle d'allocation de ressources est court, plus cette marge peut être réduite. Si cette marge est réduite au point qu'il ne soit pas possible de transmettre un code d'état ou un numéro de trame complet, une solution avantageuse consiste à multiplexer ces informations redondantes sur plusieurs blocs de données consécutifs, en espaçant les répétitions cycliques de ces informations par un indicateur de frontière de répétition, et en considérant que les informations ainsi multiplexées s'appliquent au bloc portant l'indicateur de frontière de répétition.

Le rôle de la fonctionnalité DAMA étant d'assurer un partage dynamique de la bande allouée en fonction des besoins courants de chaque station, en considérant N stations avec un traffic courant équilibré, dans un souci de simplification, avec 16 communications sur chaque station, on bénéficie d'un gain de multiplexage statistique considérable, si N est assez élevé (10 au minimum).

En effet, si N = 1, les ressources réservées pour les 16 communications sont strictement égales au passage des 16 communications, soit 16 x 16 kbits/s (une communication nécessitant 16 kbits/s au niveau de l'interface A-bis). Par contre, pour N élevé (supérieur à 10), le cas idéal est approché, cas qui correspond à la suffisance théorique de la réservation de 50% de la bande totale pour une station, soit 8 x 16 kbp/s par station, ou encore pour l'intégralité des 10 stations 10 x 8 x 16 kbps pour un sens donné, cette quantité étant à doubler pour les deux sens.

Plutôt que d'établir une réservation de ressources statique pour chaque station, une allocation dynamique de ressources est réalisée.

Avec le compresseur/décompresseur selon l'invention de la demande de priorité de INV1, on se sert de la fonction de détection de l'activité des doublets pour informer le centre de gestion de ressources 10 des besoins courants des stations. En l'occurrence, il y a une allocation de ressources toutes les 1,6 secondes et l'allocation de ressources courante se base sur les statistiques de traffic du cycle de 1,6 secondes précédent.

Sur la base de cette information de besoins courants fournie par le compresseur/décompressseur selon l'invention de la demande de priorité de INV1, le centre de ressources accroît artificiellement la taille des paquets transmis par ajout de bits supplémentaires au sein de chaque paquet transmis de manière à avoir une marge de ressources suffisante.

A titre d'exemple, si le besoin courant d'une station est de transmettre 50 octets toutes les 2,5 ms, on rajoute par exemple 10 octets supplémentaires de manière à ne pas perdre de doublets dans la transmission si le nombre de doublets actifs détectés augmente de 20% avant la prochaine allocation de ressources. Si cette précaution de réservation d'une marge supplémentaire n'est pas réalisée, le modem d'émission utilisé pour la transmission sature, et rejette les paquets en excès qu'il n'arrive pas à transmettre vis à vis de la capacité de transmission qui lui a été allouée pour le cycle courant.

Les informations des bits supplémentaires formant lesdits octets supplémentaires qui complètent les paquets de transmission, peuvent être de deux types :

- soit des informations de bourrage, non pertinentes pour la transmission de données, et uniquement destinées à servir de marge de débit pour les raisons citées ci-dessus,
- soit des informations utiles, destinées à répéter les données les plus critiques pour la transmission : répétition du code d'état, numéro de trame et éventuellement répétition des bits d'entête.

On pourrait éventuellement avoir la combinaison des deux types d'informations.

On notera que la répétition du code d'état peut s'avérer fort pertinente dans la mesure où la perte ou la mauvaise réception du code d'état par l'équipement destinataire pourrait entraîner une perturbation du processus de reconstruction de la trame, ce qui se traduirait par un décalage des doublets au sein de la trame reconstruite.

Le processus qui vient d'être décrit est identifié en tant que compression de niveau 1. La compression de niveau 2 complète la première en utilisant une signalisation identique, exploitant un code d'état analogue au code d'état décrit pour le niveau 1. Elle s'opère par identification du type de contenu véhiculé par le canal de transmission considéré. Chaque communication est multiplexée temporellement à raison d'un doublet à chaque trame, pour un canal comprimé à 16 kbps. Ce multiplexage temporel est lui-même structuré en trames, par exemple des trames de 320 bits toutes les 20 ms. Au cours de la durée d'une communication, un interlocuteur est alternativement actif ou silencieux. De manière non spécifique au dispositif considéré, lors des périodes de silence, la transmission des trames est maintenue mais un indicateur au sein de la trame permet de signaler que cette trame est non active. La compression de niveau 2 exploite cet indicateur pour suspendre la transmission des données relatives à la voix comprimée et pour ne transmettre que les éléments utiles de la trame de 320 bits. Pendant la durée de la transmission des informations utiles, le bit correspondant à la position de l'élément considéré dans la trame d'entrée du dispositif de compression est actif au sein du code d'état niveau 2, puis dès que ces informations utiles ont été transmises, le bit est remis à l'état inactif. Ce processus permet d'accroître l'efficacité du dispositif de compression de niveau 1 en l'étendant par interprétation des éléments non statiques mais comportant des données non utiles.

La figure 11 illustre de façon détaillée un dispositif de décompression ou décompresseur 302 selon un mode de réalisation de l'invention de la demande de priorité de INV1. Une entrée reliée au modem de réception 31 est reliée à une interface 45 physique assurant l'adaptation des trames (Ethernet, IP, ou ATM) au format des blocs de données compressées selon la méthode de compression exposée.

Cette interface 45 est reliée en sortie à l'entrée d'un registe tampon 46 de type FIFO stockant les blocs de données reçus.

Une première sortie du registre 46 est liée à un extracteur 47 de numéro 444 de trames alors qu'une seconde sortie est reliée à un moyen 48 d'insertion des éléments actifs de la trame courante et une troisième sortie du registre 46 est elle reliée à un détecteur 49 de code d'état.

Un compteur 50 de trames interne au décompresseur est initialisé à l'établissement de la liaison, avec un offset négatif vis à vis du numéro de la trame reçue. Cette disposition est destinée à prévenir les cas de famine dus à un retard des trames reçues vis à vis de la valeur du compteur.

Un comparateur 501 compare la valeur du numéro de trames dans l'extracteur 47 et le compteur 50. Lorsqu'il y a identité entre la valeur du compteur et le numéro de trame associé au bloc présent dans le registre tampon 46, le comparateur commande à une mémoire 51 contenant la trame précédente de la délivrer à une entrée du moyen d'insertion 48.

Le détecteur 49 de codes d'état, détecte le code d'état associé au bloc de données reçu, le fournit à l'entrée d'un registre 52 d'état dont la sortie est reliée à une autre entrée du moyen 48 d'insertion.

Enfin le registre mémoire 46 délivre le bloc de données reçues à une troisième entrée du moyen 48 d'insertion. Ainsi, sur identité des numéros de trame et de compteur de trames, le moyen d'insertion 48 reconstitue la trame courante à partir de la répétition de la trame précédente de la mémoire 51 et en remplaçant les éléments signalés comme actifs par les valeurs contenues dans le bloc de données reçues, et sur la base des informations signalant les positions des éléments actifs délivrées par le registre 52 d'état.

La trame reconstituée est alors délivrée à une interface 53 physique assurant l'adaptation des blocs de données au format des trames véhiculées sur l'interface A-bis.

Une attention particulière doit être portée sur le fait que l'esprit de l'invention de la demande de priorité de INV1 peut être étendu aux couches supérieures de données, comme expliqué ci-après :

les données véhiculées au sein des trames à comprimer sont généralement elles-mêmes encapsulées au sein de trames dont le format est propriétaire ou non. La méthode de compression/décompression peut être étendue, suivant le même principe, à la compression des données situées à l'intérieur des trames. L'objectif de cette extension est d'introduire un gain de compression encore plus élevé, en éliminant toutes les données superflues.

Un exemple est l'encapsulation d'un canal voix utilisateur à 9,6 kbits/s dans une trame à 16 kbits, encapsulation effectuée en rajoutant des bits de synchronisation, de bourrage et de signalisation. La méthode de compression additionnelle est destinée à supprimer les bits de synchronisation et de bourrage, et de ne conserver que les bits de signalisation (codes d'états, ...) qui présentent un caractère dynamique, au sens donné précédemment par la détection des éléments actifs.

La synchronisation de la restitution de trames d'origine s'effectue de manière implicite, par détection de la frontière entre les blocs de données transmis.

Un intérêt particulier peut être souligné au mode de réalisation de la méthode de compression/décompression selon l'invention de la demande de priorité de INV1 telle que décrite dans la suite, consistant en un passage automatique en mode non comprimé :

le gain en bande passante est évalué en permanence. Dès que le flux moyen de sortie du compresseur de doublets excède le flux moyen d'entrée en termes de débit, le dispositif de compression est court-circuité, de manière synchrone sur une frontière de trame, et un indicateur est transmis au décompresseur afin de désactiver le mécanisme de décompression côté décompresseur. A l'inverse, dès que le flux moyen comprimé passe en dessous d'un certain seuil vis à vis du flux incident, le dispositif de compression/décompression est réactivé.

Le seuil est destiné à éviter le basculement intempestif du mode comprimé au mode non comprimé, notamment lorsque la charge des trames à transmettre est proche de la saturation.

En vue d'éviter toute perturbation de la liaison par satellite qui pourrait se traduire par une perte d'informations, une altération des informations transmises, voire un ajout d'informations perturbatrices et donc une perturbation sur la restitution des trames, les dispositions suivantes sont considérées, applicables de manière singulière ou combinée :

- passage automatique en mode non comprimé dès que la qualité de la liaison devient critique (monitoring de l'$E_b/N_0$ ou du BER), et/ou exploitant la détection d'erreur basée par exemple sur le CRC associé à chaque trame Ethernet,
- ajout de codes de redondance cyclique aux informations les plus critiques, notamment le code d'état, destiné à sécuriser la récupération correcte de cette information,
- répétition du code d'état,
- transmission systématique du code d'état dès que la qualité de la liaison passe en dessous d'un certain seuil ou dès qu'une erreur est détectée (erreur de séquence du numéro de trame ou erreur de CRC),
- envoi du code d'état avec une cadence plus élevée lorsque la qualité de la liaison se dégrade,
- contrôle du numéro de trame associé au bloc de données reçu, afin de détecter des ruptures de séquence liées notamment à une perte de trame, et analyse du numéro de trame suivant afin de corriger une erreur passagère sur un numéro de trame.

Il existe dans l'art antérieur un tramage nommé IBS ("Intelsat Business Services") utilisé pour la transmission par satellite du type de la structure de trame décrite à la figure 6. La transmission en tramage IBS est très répandue, car elle offre la possibilité de transmettre N x 64 kbps, N étant établi en fonction du besoin réel de l'opérateur de réseaux. Cependant, les modems IBS n'intégrent pas de fonctionnalité permettant de faire varier dynamiquement le débit N x 64 kbps en fonction du contenu à transmettre.

Selon un mode de réalisation, le dispositif de compression 30 départage le traffic sur deux ou plus de ses sorties, chaque sortie offrant un débit fixe, activé en fonction de la charge résultant après compression par le compresseur 301 suivant la méthode décrite ci-dessus. Dès que le débit comprimé dépasse le débit réservé sur la première voie, par exemple 5 x 64 kbits/s, on décharge une partie du traffic sur une seconde voie, par exemple à 2 x 64 kbits/s, et dès que cette seconde voie est à son tour saturée, on bascule la seconde voie sur une troisième voie à, par exemple, 4 x 64 kbps, et ainsi de suite en basculant le surcroît de traffic entre les voies 2 et 3 sans interruption de la transmisssion mais en déchargeant le traffic de la voie permanente vers la voie additionnelle ainsi constituée.

Côté réception, on reconstitue les trames d'origine en concaténant les blocs de données reçus via la voie principale et via la voie additionnelle.

La figure 12 illustre une variante 303 du dispositif de décompression 302 de la figure 11 qui peut être appliquée également et avantageusement dans un réseau IP quelconque, public ou privé. Les fonctions avantageuses dans ce cas sont : la compression/décompression de données aux niveaux 1 et 2, l'ajout de numéro de trame, la décompression avec resynchronisation des trames en sortie et traitement spécifique en cas de non réception de la trame comprimée à l'instant où elle doit être restituée.

Les blocs de données 44 entrent dans le décompresseur 303 par une entrée 3030. Un extracteur 304 de numéros de trames extrait les numéros de chaque trame permettant de les identifier. D'autre part les blocs 44 sont fournis à une mémoire (305) de mémorisation des blocs de données. Sur la figure 12, sont illustrés 6 blocs de données caractérisés par leurs numéros 444 de trames représentés chacun par un bloc plein. La première case de chaque bloc représente le code d'état 442 du bloc et les cases suivantes correspondent aux données comprimées 441.

Une ligne discontinue référencée A sur la figure 12 entoure notamment la partie commune avec la figure 11 pour la restitution des trames d'origine. Celle-ci ayant été déjà décrite et expliquée, on n'y reviendra pas ici.

En outre, le dispositif 303 comprend un circuit 307 d'initialisation de compteur recevant le numéro de la trame courante ainsi ainsi que le nombre de blocs de données mémorisés dans la mémoire 305.

Lors de l'initialisation du dispositif de décompression, le circuit 307 initialise le compteur 50 en le synchronisant avec le premier numéro de trame reçu par le décompresseur.

En outre, sur détection répétée d'écart entre les numéros de trames reçus et la sortie courante du compteur par la suite, la synchronisation par le circuit d'initialisation est réitérée.

Le fonctionnement est le suivant: les trames décomprimées sont destinées à être conservées dans la mémoire 305 du dispositif de décompression tant que le numéro de trame qui leur est respectivement associé n'est pas identique au numéro de trame délivré par le compteur de trames local compte tenu d'un offset négatif, pour permettre une certaine souplesse dans la restitution des trames et pour compenser les fluctuations temporelles induites par le système de transmission, ce qui arrive souvent lors d'une transmission par satellite ou dans les réseaux terrestres notamment IP, alors que les trames sont censées être restituées à un rythme constant et immuable. Dès que l'identité se produit au niveau du comparateur 501, la trame pour laquelle l'identité est apparue est alors appliquée à la sortie du dispositif du décompression.

Si aucune trame ne répond au numéro de la trame à restituer en sortie du dispositif de décompression, la trame précédente est répétée et/ou un code d'erreur est généré par un générateur 307 de signalisation d'absence de trames à destination d'un centre non représenté de gestion du système de télécommunications.

Si l'erreur de non-identité entre le numéro de trame courante et le numéro de trame délivré par le compteur de trames local du dispositif de décompression se répète sur plusieurs trames consécutives, le compteur de trames local est resynchronisé sur les identifiants de trames reçus.

L'offset négatif appliqué sur la sortie du compteur de trames est destiné à établir une marge permettant de couvrir la plage de fluctuations temporelles induites par le système de transmission par satellite.

On voit sur le schéma de la figure 12 qu'au lieu d'utiliser une FIFO telle que celle utilisée sur le mode de réalisation de la figure 11, on utilise une mémoire buffer, permettant de réordonner les blocs de données reçus, sur la base du numéro de bloc associé à chaque bloc de donnée, numéro représenté dans les cases pleines, le circuit d'initialisation permettant d'initialiser le compteur au démarrage, ou à chaque fois qu'une rupture de séquence répétée se produit.

L'initialisation du compteur local est opérée en fonction des statistiques de variation du nombre de blocs présents dans le buffer, en régulant la valeur minimale pour qu'elle soit toujours supérieure à 1 en tenant compte d'une marge supplémentaire, et inférieure à la capacité du buffer exprimée en nombre de blocs maximum.

Si le nombre de blocs stockés atteint la taille du buffer exprimée en nombre de blocs max, une alarme est générée par le générateur 306, signifiant qu'un comportement anormal du réseau est constaté (fluctuations temporelles trop importantes).

Ce dispositif de décompression selon cette variante présente donc l'avantage de pouvoir d'une part recevoir des blocs de données en séquence désordonnée grâce à la mémoire 305, et d'autre part pouvoir supporter des fluctuations de délai de transmission grâce à l'offset introduit.

Ce qui est décrit dans la suite est directement lié à l'esprit de l'invention de la demande de INV1.

Le principe de l'invention consiste en l'analyse du contenu de chaque canal (porté par deux bits dans les précédents modes, mais qui peuvent l'être de façon non limitative par un, deux, quatre ou huit bits selon le mode de transmission) ; si le canal analysé est constitué par la répétition consécutive d'un motif de référence ou fenêtre de référence ("référence pattern" en anglais) tout au long d'une fenêtre d'analyse, il est comprimé ; par exemple, pour un motif de référence sur 4 bits, correspondant à l'état du bit considéré au cours des 4 dernières trames précédant la fenêtre d'analyse courante :

- si la trame de référence = 1011 par exemple,
- le canal est comprimé si au cours de la fenêtre d'analyse, le contenu successif du canal considéré (codé sur un bit dans le cas présent) est égal à :
  a b c d a b c d a b c d a b c d

si au moins 1 bit diffère de la répétition cyclique du motif de référence, le canal est considéré comme actif, c'est à dire non statique, et son contenu est transmis intégralement pour la fenêtre d'analyse courante; pour un canal comprimé, aucune donnée n'est transmise hormis un descripteur de canal actif ou ACD (pour "Active Channel Descriptor" en anglais), qui permet d'identifier la position des canaux actifs au sein de la trame à reconstituer. Le descripteur ACD est également dénommé code d'état (référencé 442 dans les précédents modes de réalisation de la demande de priorité).

En conséquence, au lieu de se baser sur l'état d'un seul bit par canal pour détecter le passage à l'état statique, on exploite l'état du bit au cours des N dernières trames précédant la fenêtre d'analyse courante.

Un mode de réalisation du procédé de compression est illustré à la figure 13, avec N = 4.

On remarque que les deux premiers canaux de la fenêtre d'analyse 70 se répète avec une période de 4 trames consécutives, à l'identique du motif de référence 71 constituée par l'état du canal lors des 4 dernières trames précédant la fenêtre 70 d'analyse courante. Une décision de copression du motif répété est alors prise.

Le dispositif 301' de compression selon l'invention de lNV1, illustré sur la figure 14, est analogue à celui 301 de la figure 7, à l'exception d'une mémoire 34' de mémorisation de L*N trames courantes formant la fenêtre d'analyse 70 et d'une mémoire 35' de mémorisation des N trames précédant la fenêtre d'analyse formant le motif de référence.

De même, le dispositif 302' de la figure 15 est analogue à celui de la figure 11, à ceci près du remplacement de la mémoire 51 par une mémoire 51' de mémorisation du motif de référence (les 4 dernières trames de données précédant la trame compressée courante).

Le procédé est alors identique au procédé de la demande de priorité exposé ci-dessus :

- du côté du compresseur, suppression des canaux statiques de la fenêtre courante, transmission à chaque fenêtre d'analyse du code d'état ACD permettant de spécifier la position de chaque canal actif au sein de la trame d'entrée, suivi du contenu concaténé de chaque canal actif ;

- du côté du décompresseur, extraction//détection du code d'état ACD par le détecteur 49, puis restitution de la structure de la trame non comprimée par insertion du contenu de chaque canal actif à la position spécifiée par le code d'état ACD, avec répétition pour chaque canal statique du contenu de son bit statique correspondant tiré du motif de référence (processus nouveau, au lieu du maintien du bit de référence du canal statique considéré), grâce à la comparaison/mémorisation du contenu des N dernières trames précédant le passage du canal à l'état statique. Ce motif de référence est transmis périodiquement entre deux blocs de données 44'.

On aborde désormais un aspect particulièrement avantageux de l'invention de INV1 qui répond au besoin de sécurisation du procédé de récupération des canaux concaténés, transmis sous forme sérialisée.

En effet, un problème peut survenir suite à un défaut de sérialisation ou de séquencement se traduisant par un décalage des données transmises, à droite si des canaux déclarés non actifs ont été insérés par erreur, à gauche si des canaux déclarés actifs n'ont pas été insérés.

La figure 16 représente une structure 44' de trame compressée selon la méthode de compression de l'invention de INV1 à partir d'un enssemble 500 de NT trames E1 et qui refournit en fin de chaîne, côté décompresseur, les NT trames E1 :

Cette structure commence classiquement par au moins un octet 446 de synchronisation et se termine par des bits 447 de bourrage.

Lorsque le dispositif fonctionne correctement, le nombre de bits du champ 441' dit CAC (pour "concatenated active channels" en anglais) est égal au nombre de bits à 1 dans le code d'état, caractérisant la position des canaux actifs au sein de la trame d'entrée, multiplié par le nombre NT de trames entrant dans la fenêtre d'analyse.

Par exemple, si ACD = 0 1 0 1 110 1 en valeur binaire, où 5 bits sont à 1, signifiant que 5 canaux sont actifs pour la fenêtre d'analyse courante, et si NT = 16, signifiant que la fenêtre d'analyse porte sur 16 trames d'entrée au niveau du compresseur, alors le nombre de bits du champ CAC est égal à 5 x NT = 80 bits ; le dispositif compare les 8 bits de la trame reçue, situés 80 bits après la fin de l'ACD CRC 445; si aucune erreur de formatage ou de transmission ne s'est produite, le champ ainsi obtenu est égal à la valeur établie pour un délimiteur 448 agencé juste après le CAC.

Cependant, le délimiteur qui fixe la frontière entre le champ « concatenated active channels » et les bits de bourrage peut être décalé vis à vis de la position qu'il est censé occuper.

Plusieurs erreurs sont possibles, induites par des erreurs binaires induites au niveau de l'ACD, de l'ACD CRC, ou du délimiteur.

Pour détecter et traiter un tel cas, qui résulterait en une erreur de décompression, différentes actions sont réalisées ; elles sont toutes basées sur l'analyse du contenu du délimiteur de la trame compressée reçue (tout de suite après le champ « concatenated active channels » tel qu'exploité à partir de l'ACD reçu), et sur l'exploitation du champ de l'ACD CRC (Code de Redondance Cyclique), qui permet de détecter une erreur dans la transmission de l'ACD (ou dans le CRC associé à l'ACD).

Le délimiteur présente une valeur fixe, établie du côté du compresseur, et égale à 1111 0000 par exemple.

Tous ces cas sont traités succesivement par calcul du CRC associé à l'ACD, comparaison du CRC calculé avec l'ACD CRC reçu, et comparaison du champ reçu, consécutif au champ « concatenated active channels » avec la valeur fixée pour le délimiteur, suivant le processus suivant :

- cas normal : si l'ACD CRC et le délimiteur sont corrects, alors la décompression est effectuée en utilisant l'ACD reçu ;

- si l'ACD CRC est incorrect mais si le délimiteur est correct, alors « erreur ACD CRC », la décompression est effectuée en utilisant l'ACD reçu ;

- si l'ACD CRC est correct mais le délimiteur est incorrect, alors « erreur délimiteur », la décompression est effectuée en utilisant l'ACD reçu ;

- si l'ACD CRC et le délimiteur sont tous deux incorrects, un test est réalisé pour détecter si le champ du délimiteur est correct en se basant sur l'ACD de la trame compressée précédente (les changements d'activité de canaux sont généralement nettement moins fréquents que la période des trames compressées) ; si le test est positif, alors « erreur ACD », la décompression est effectuée en utilisant l'ACD de la trame compressée précédente ; si le test est négatif, alors « erreur décompression », il y a suspension de la décompression et sortie de trames vides.

A présent, ce qui suit est directement lié à l'esprit de l'invention de la présente demande.

Le principe de l'invention, lié évidemment à ce qui précède en ce que des canaux peuvent se retrouver statiques dans leurs contenus respectifs, peut se résumer par ce qui suit :

Lorsqu'un canal passe de l'état actif à l'état statique, on diffère d'une fenêtre (ou plus) la compression du canal ; à l'inverse, dès qu'il redevient actif, on supprime immédiatement le processus de compression pour canaux statiques.

Ce processus de retard entre la non-activité du canal et sa compression permet de réaliser une analyse statistique de l'état de chacun des bits en vue de reconstituer un motif de référence exempt d'erreurs et de caractériser précisément le taux d'erreur de la transmission ; si ce taux d'erreur s'accroît, on augmente automatiquement le délai en nombre de fenêtres d'analyse entre le passage des canaux à l'état statique et leur compression effective, de manière à accroître la tolérance sur les erreurs de transmission.

Il est exposé ci-dessous le fonctionnement de la présente invention de façon plus détaillée :

Le descripteur de canaux actifs ACD 442' est toujours représentatif de ce qui transite entre le compresseur et le décompresseur, c'est à dire que si le canal vient de passer à l'état statique mais qu'il n'est pas encore comprimé selon l'invention de INV1, le bit d'ACD correspondant à ce canai signale que ce canal est actif, puisque l'on continue de transmettre le contenu du canal à destination du décompresseur.

La figure 18 représente un diagramme illustrant la période d'échantillonage du motif de référence et sa transmission dans le système, les états successifs d'un canal donné et les moments où le procédé de compression selon INV1 sont enclenchés selon INV1.

On remarque en premier lieu les différentes fenêtres d'analyse F1 à F6 se succédant temporellement. On note qu'entre chaque fenêtre d'analyse 70 est transmis le motif de référence 71.

Un canal C est estimé actif durant une première période jusqu'à un instant t0. Ce canal C devient alors statique jusqu'à un instant t1, instant à partir duquel il bascule de nouveau en état actif.

La ligne d'en-dessous traduit la transmission du contenu du canal dans l'ACD en fonction de son état actif ou non.

Tel qu'il a été expliqué ci-dessus, le canal C devenant statique pendant la fenêtre F2, il est compressé (c'est à dire non transmis) à partir de la fenêtre F3 et ce jusqu'à la fenêtre F6 (instant t2), puisque le canal redevient actif pendant cette dernière (instant t3).

Tel est le fonctionnement de l'invention INV1.

La figure 19 illustre le même diagramme mais selon la présente invention.

On remarque ainsi sur la figure 19 que le contenu du canal statique a été répété tout au long d'une fenêtre analyse supplémentaire (la fenêtre F3), alors que le canal est devenu statique pendant la fenêtre F2. Ceci veut dire que le canal devenu statique est tout de même transmis dans la fenêtre d'analyse suivante (F3) au sein de l'ACD et du CAC. Cette modification permet de réaliser, du côté du décompresseur, une analyse statistique, bit par bit, permettant de restituer l'état initial, 0 ou 1, de chaque bit porté par le canal statique, en contournant donc les effets d'une transmission perturbée ; pour cela, on retient l'état, 0 ou 1, du bit qui est revenu le plus souvent pour le bit considéré tout au long de la fenêtre d'analyse (fenêtre F3 sur cet exemple).Dans un mode de réalisation particulier, et afin d'accroître légèrement la précision de ce mécanisme, l'état de chaque bit au cours des N dernières trames précédent la fenêtre courante, est également pris en compte dans ce processus d'analyse statistique (71 sur la figure 13), ce qui a pour effet d'étendre légèrement le nombre de trames prises en compte dans ce processus d'analyse statistique.

Il est représenté sur la figure 20 un mode de réalisation de l'analyse statistique telle que réalisée selon l'invention incorporant un ensemble de compteurs, la figure 21 illustre l'évolution d'un de ces compteurs au cours du temps sans erreurs de transmission du canal associé alors que la figure 22 représente l'évolution du même compteur avec deux erreurs de transmission sur ce canal. Cette analyse statistique est réalisée de la manière suivante:

M étant le nombre de canaux compris dans une trame E1, la taille du motif de référence étant de N bits, on utilise un total de M x N compteurs (N = nombre de trames entrant dans la composition du motif de référence).

Chacun des M x N compteurs est remis à 0 lors du début du motif de référence précédant la fenêtre d'analyse considérée. Ainsi, sur la figure 20, le compteur cptr1 est mis à 0 au début de la fenêtre d'analyse 70 et est associé au 4ème bit du groupe 700 (appelé b1).

On exploite l'état de chaque bit reçu au sein du groupe 700 de N (=4 sur la figure 20) bits correspondant au canal considéré et on applique une convention présentée ci-dessous, par exemple, pour le bit b1 :

si b1 reçu côté décompresseur = 1, le compteur cptr1 est décrémenté de 1
si b1 reçu côté décompresseur = 0, le compteur cptr1 est incrémenté de 1

et on exploite chaque compteur à l'issue de la fenêtre courante en utilisant le principe suivant :

- soit X la valeur finale du compteur cptr1
- le bit de poids fort de X est pris comme résultat ; s'il est à 1, cela signifie que le résultat du compteur cptr1 est négatif, que l'on a plus souvent décrémenté qu'incrémenté, donc que l'on a reçu plus de 1 que de 0 pour le bit b1 considéré ; et inversement pour l'état 0, résultant d'incrémentations majoritaires,

- si aucun bit reçu n'a été affecté d'erreur (ou exceptionnellement et de manière très peu probable si tous les bits ont été entâchés de la même inversion de chaque bit) la valeur absolue du résultat du compteur, |X|, est égale au nombre de trames NT constituant la fenêtre de compression,

- par extension de ce principe, si des erreurs se sont introduites au cours de la transmission, leur nombre est caractérisé par :

$$\text{nombre d'erreurs } Ne = ( 1 + ( NT / N ) - |X| ) / 2$$

N étant le nombre de trames entrant dans la constitution du motif de référence.

La figure 20 permet d'illustrer le graphe de comptage qui s'établit en prenant comme valeurs N = 4 et NT = 16.

- le bit b1 valant 0 dans le 1$^{er}$ groupe 700, le compteur cptr1 prend la valeur 0+1 = 1, d'après la convention ci-dessus,
- le bit b1 valant 1 dans le 2nd groupe 700, le compteur cptr1 prend la valeur 1-1 = 0,
- le bit b1 valant 0 dans le 3$^{ème}$ groupe 700, le compteur cptr1 prend la valeur 0+1 = 1,
- le bit b1 valant 0 dans le 1$^{er}$ groupe 700, le compteur cptr1 prend la valeur 1+1 = 2.

Ce résultat se transcrit en binaire par 0.. 0010, le bit de poids fort représentant l'état du bit au final c'est à dire son signe.

Selon le même principe, le bit b2 se retrouve égal à -2 en fin de fenêtre et donc sera transcrit 1.. 0010 en binaire.

La figure 21 permet d'illustrer le graphe de comptage qui s'établit en prenant comme valeurs N = 4 et NT = 32 ; les bits du motif de référence sont appelés respectivement a b c d, et on s'intéresse à l'évolution du compteur X associé au bit d, tout d'abord sans erreurs de transmission (le bit d est pris égal à 0, pour cet exemple).

d représente l'état du bit d reçu. Sans erreurs de transmission (cas de la figure 21), à l'issue de la fenêtre considérée, le compteur X vaut 9, signifiant que d = 0 (valeur du bit de signe du compteur X) et que :

$$1 + ( NT / N ) - |X| = ( 1 + ( 32 / 4 ) - 9 ) / 2 = 0,$$

signifiant qu'aucune erreur de transmission n'a été détectée.

La figure 22 représente le graphe de comptage avec deux erreurs de transmission au cours de la fenêtre considérée.

A l'issue de la fenêtre considérée, le compteur X vaut 4, signifiant que d = 0 et que :

$$1 + ( NT / N ) - |X| = ( 1 + ( 32 / 4 ) - 5 ) / 2 = 2$$

signifiant que 2 erreurs de transmission ont été détectées.

il s'agit donc d'un procédé de vote majoritaire pour décider si chaque bit pris individuellement est égal à 1 ou à 0, en se basant sur les statistiques accumulées au cours de la fenêtre d'analyse, côté décompresseur.

Il faudrait que plus de la moitié des bits reçus soient erronés pour que ce dispositif sorte la mauvaise valeur de bit de référence, en l'occurrence 5 bits erronés sur cet exemple ; jusqu'à 4 bits erronés, le dispositif sort la bonne valeur d'état du bit de référence, en indiquant que 4 erreurs ont été détectées.

Le nombre maximum d'erreurs détectées est retourné en permanence vers le compresseur, afin d'ajuster le nombre de fenêtres entrant en ligne de compte dans ce processus de transmission de trames statiques lors du passage du canal de l'état actif à l'état statique. Le besoin de transmettre plus d'une fenêtre correspond à des cas d'utilisation de la liaison en mode très dégradé, une seule fenêtre présentant des conditions de récupération des bits de référence très largement suffisantes dans les conditions d'utilisation normale d'une liaison. Néammoins, cela constitue un moyen d'adaptation très efficace de l'overhead (champ d'entête) de compression en fonction de la qualité de la liaison.

Si l'on opère la compression avec ce mode où le nombre de fenêtres utilisées pour la transmission du motif de référence varie en fonction de la qualité de la liaison, une information est intégrée dans l'entête de chaque trame comprimée, spécifiant le nombre de fenêtres utilisées couramment pour ce processus de répétition : 0 si le taux d'erreur mesuré par le démodulateur associé au décompresseur sur la liaison est inférieur à un seuil donné, par exemple 10$^{-8}$, 1 si taux d'erreur mesuré par le modem excède ce seuil de référence, puis augmentation du nombre de fenêtres de 1 à chaque fois que le taux d'erreur mesuré suivant le principe qui vient d'être décrit excède x % de la valeur NP/N, par exemple 25%; ce principe global constitue une variante de réalisation avantageuse.

Bien entendu, la présente invention n'est pas limitée aux modes de réalisation décrits et d'autres modes de réalisation de l'invention peuvent être facilement imaginés par l'homme du métier.

**Revendications**

1. Méthode de décision sécurisée de l'état 0 ou 1 de chaque bit d'un motif répété par un canal statique de communication dans un dispositif de décompression de données, destinée à décompresser un bloc de données (44') comportant un groupe (441') de données comprimées à partir d'un ensemble (500) de trames (60) de données par un dispositif de compression de données, ce groupe (441') comportant tous les canaux actifs de l'ensemble (500), étant entendu que les trames (60) étant de structure définie selon une pluralité d'intervalles temporels, un premier groupe d'intervalles temporels étant tels que chacun d'eux soit décomposé selon une pluralité de bits d'informations portant respectivement un canal de communication, et que l'état actif, respectivement statique, de chaque canal étant attribué lorsque la comparaison du contenu de ce canal dans les N bits comparés entre les N trames d'un motif (71) de référence avec les N bits correspondants des N trames, éventuellement répétés L fois, formant une fenêtre d'analyse, montre une variation de contenu pour au moins l'un des bits, respectivement une stabilité de contenu pour l'ensemble des N bits, avec N entier supérieur ou égal à 1, **caractérisé en ce que** la méthode comporte les étapes suivantes

   - une étape de transmission d'un descripteur précisant l'état, statique ou actif, du canal de transmission,
   - une étape de transmission du contenu du canal devenu statique sur les L*N trames de la fenêtre d'analyse suivant son passage à l'état statique,
   - une étape d'analyse statistique, sur la fenêtre d'analyse portant sur les L*N trames suivant le passage du canal à l'état statique, de l'état de chaque bit du motif répété par ledit canal, basée sur un vote majoritaire des états obtenus pour chaque bit du canal considéré sur les L groupes de trames dans la fenêtre d'analyse, analyse statistique destinée à rétablir l'état initial de chaque bit du motif.

2. Méthode selon la revendication 1, **caractérisée en ce que**, pour chaque bit porté par ledit canal, un compteur (cptr1) est associé et **en ce que** l'étape d'analyse statistique comprend une étape d'initialisation du compteur (cptr1) est réalisée en début de la fenêtre d'analyse, une convention d'incrémention ou décrémentation du compteur étant établie selon les valeurs binaires successives que prend chaque bit du canal au sein des L groupes (700), le signe de la valeur finale (X) du compteur permettant de décider sur l'état majoritairement représenté au sein des L groupes.

3. Méthode selon la revendication 2, **caractérisée en ce que** le nombre d'erreurs de transmissions de bits correspondant au canal spécifié est défini par la relation :

$$Ne = (\ 1 + (NT/N) - \left|X\right|\ )\ /\ 2,$$

   NT = L*N correspond aux nombres de trames entrant dans la composition d'une fenêtre d'analyse.

4. Méthode selon l'une des revendications 1 à 3, **caractérisée en ce qu'**on varie le nombre de fenêtres d'analyse utilisées pour le processus de répétition du motif statique en fonction de la qualité de transmission existant entre le dispositif de compression et le dispositif de décompression.

5. Méthode selon la revendication 4, **caractérisée en ce qu'**une information est intégrée dans une entête du bloc de données pour spécifier le nombre de fenêtres d'analyse utilisées.

6. Méthode selon la revendication 5, **caractérisée en ce que** le nombre de fenêtres d'analyse utilisées pour le processus de répétition du motif statique est actualisé en fonction du taux d'erreur mesuré sur la liaison.

7. Système de télécommunications de données comprenant un dispositif de compression et un disposiif de décompression, apte à mettre en oeuvre la méthode selon l'une des revendications 1 à 6.

**Claims**

1. Secure method of deciding on the 0 or 1 state of each bit of a pattern repeated by a static communication channel in a data decompression device adapted to decompress a block of data (44') including a group (441') of data from a set (500) of data frames (60) compressed by a data compression device, said group (441') including all the active channels of the set (500), it being understood that the frames (60) have a structure defined in accordance with a plurality of time slots, each time slot of a first group of time slots is divided into a plurality of information bits carrying a respective communication channel, and the active state, respectively the static state, of each channel is assigned if the comparison of the content of this channel in the N bits compared between the N frames of a reference pattern (71) with the corresponding N bits of the N frames of the analysis window, where applicable repeated L times, shows a variation in the content for at least one of the bits, respectively a stability of the content for all of the N bits, where N is an integer greater than or equal to 1,
   **characterised in that** the method includes the following steps:

   - a step of transmitting a descriptor specifying the static or active state of the transmission channel,
   - a step of transmitting the content of the channel that has gone to the static state on the L*N frames of the analysis window after it goes to the static state,
   - a step of statistical analysis, over the analysis window carrying the L*N frames after the channel changes to the static state, of the state of each bit of the pattern repeated by said channel, based on a majority vote of the states obtained for each bit of the channel considered on the L groups of frames in the analysis window, which statistical analysis is intended to reconstitute the original state of each bit of the pattern.

2. Method according to claim 1, **characterised in that** a counter (cptr1) is associated with each bit carried by said channel and the statistical analysis step includes a step of initialising the counter (cptr1) at the start of the analysis window, a convention for incrementing or decrementing the counter being established in accordance with the successive binary values taken by each bit of the channel within the L groups (700), the sign of the final value of the counter deciding on the state present in the majority in the L groups.

3. Method according to claim 2, **characterised in that** the number of bit transmission errors corresponding to the specified channel is identified by the following equation in which NT = L*N corresponds to the number of frames contributing to the composition of an analysis window:

$$Ne = ( 1 + (NT/N) - |X| ) / 2.$$

4. Method according to any of claims 1 to 3, **characterised in that** the number of analysis windows used for the process of repeating the static pattern as a function of the existing transmission quality between the compression device and the decompression device is varied.

5. Method according to claim 4, **characterised in that** information is integrated into a header of the block of data to specify the number of analysis windows used.

6. Method according to claim 5, **characterised in that** the number of analysis windows used for the process of repeating the static pattern is updated as a function of the error rate measured on the connection.

7. Data transmission system comprising a compressor and a decompressor and adapted to implement the method according to any of claims 1 to 6.

**Patentansprüche**

1. Verfahren zur sicheren Entscheidung über den Zustand 0 oder 1 für jedes Bit eines Musters, das von einem statischen Kommunikationskanal in einer Daten-Dekompressionsvorrichtung wiederholt wird, die zur Dekompression eines Datenblocks (44') bestimmt ist, der eine komprimierte Datengruppe (441') umfasst, ausgehend von einer Einheit (500) von Datenrastern (60) durch eine Datenkompressionsvorrichtung, wobei diese Gruppe (441') alle aktiven Kanäle der Einheit (500) umfasst,
   wobei es sich versteht, dass die Raster (60) eine Struktur aufweisen, die entsprechend einer Vielzahl von Zeitschlitzen definiert wird, wobei bei einer ersten Gruppe von Zeitschlitzen jeder entsprechend einer Vielzahl von Informationsbits aufgeteilt ist, die jeweils einen Kommunikationskanal übertragen, und dass der aktive, bzw. statische Zustand jedes Kanals, der durch den Vergleich des Inhalts dieses Kanals in den N Bits zugeordnet wird, die zwischen den N Rastern eines Referenzmusters (71) verglichen werden, die eventuell L Mal wiederholt werden, die ein Analysefenster bilden, eine Veränderung des Inhalts in mindestens einem der Bits, bzw. eine Stabilität des Inhalts für sämtliche N Bits aufweist, wobei N eine ganze Zahl größer oder gleich 1 ist,
**dadurch gekennzeichnet, dass** das Verfahren die folgenden Schritte umfasst:

- einen Schritt zur Übertragung eines Deskriptors, der den statischen oder aktiven Zustand des Übertragungskanals angibt,
- einen Schritt zur Übertragung des Inhalts des statisch gewordenen Kanals über die L*N Raster des Analysefensters nach seinem Übergang in den statischen Zustand,
- einen Schritt zur statistischen Analyse des Zustands jedes Bits des von dem genannten Kanal wiederholten Musters in dem Analysefenster, das sich über die L*N Raster nach dem Übergang des Kanals in den statischen Zustand erstreckt, basierend auf einer mehrheitlichen Abstimmung über die für jedes Bit des betreffenden Kanals über die L Rastergruppen im Analysefenster erfassten Zustände, wobei die statistische Analyse dazu dient, den ursprünglichen Zustand jedes Bits im Muster wiederherzustellen.

2. verfahren gemäß Anspruch 1, **dadurch gekennzeichnet, dass** jedem über den genannten Kanal übertragenen Bit ein Zähler (cptr1) zugeordnet ist, sowie **dadurch**, dass der Schritt zur statistischen Analyse einen Schritt zur Initialisierung des Zählers (cptr1) umfasst, der zu Beginn des Analysefensters durchgeführt wird, wobei eine Konvention zur Heraufsetzung oder Herabsetzung des Zählers entsprechend den aufeinander folgenden binären Werten erstellt wird, die jedes Bit des Kanals innerhalb der L Gruppen (700) einnimmt, wobei das Vorzeichen des endgültigen Zählerwertes (X) eine Entscheidung über den Zustand ermöglicht, der mehrheitlich innerhalb der L Gruppen repräsentiert wird.

3. verfahren gemäß Anspruch 2, **dadurch gekennzeichnet, dass** die Anzahl an Bit-Übertragungsfehlern, die dem spezifizierten Kanal entsprechen, anhand der folgenden Gleichung definiert wird:

$$Ne = (1 + (NT/N) - |X|)/2,$$

NT = L*N entspricht der Anzahl an Rastern, aus denen das Analysefenster zusammengesetzt ist.

4. Verfahren gemäß einem der Ansprüche 1 bis 3, **dadurch gekennzeichnet, dass** man die Anzahl an Analysefenstern, die für den Wiederholungsprozess des statischen Musters genutzt werden, in Abhängigkeit von der bestehenden Übertragungsqualität zwischen der Kompressionsvorrichtung und der Dekompressionsvorrichtung verändert.

5. Verfahren gemäß Anspruch 4, **dadurch gekennzeichnet, dass** eine Information in den Header des Datenblocks eingefügt wird, um die Anzahl an genutzten Analysefenstern zu spezifizieren.

6. Verfahren gemäß Anspruch 5, **dadurch gekennzeichnet, dass** die Anzahl der für den Wiederholungsprozess des statischen Musters genutzten Analysefenster in Abhängigkeit von der in der Verbindung erfassten Fehlerquote aktualisiert wird.

7. Daten-Telekommunikationssystem, das eine Kompressionsvorrichtung und eine Dekompressionsvorrichtung umfasst, und in der Lage ist, das Verfahren gemäß einem der Ansprüche 1 bis 6 umzusetzen.

## FIG_1

## FIG_2

IT1        IT16        IT32

## FIG_3

## FIG_4

FIG_6'

30 301 26

33

31 32

E1 interface

302

FIG_5

23

BTS

27 24 22

PLMN MSC BSC BTS

25

A-bis 26 26 A-bis BTS

BTS

26

BSS

21

10

EP 1 376 958 B1

# FIG_6

# FIG_7

| 0 | 1 | 2 | 3 | 4 | 5 | 6 | 7 | 8 | 9 | 10 | 11 | 12 | 13 | 14 | 15 | 16 | 17 | 18 | 19 | 20 | 21 | 22 | 23 | 24 | 25 | 26 | 27 | 28 | 29 | 30 | 31 | 0 |

| 01 | 01 | 01 | 11 |
| 11 | 00 | 10 | 11 |
| 10 | 11 | 10 | 11 |
| 11 | 11 | 01 | 11 |
| 08 | 11 | 00 | 11 |
| 01 | 11 | 11 | 11 |

↓ Temps

## FIG_8

## FIG_9

444    441    442    443

44

## FIG_11

302

45    46    47    501    50

| 0 | 1 | 2 | 3 | — | 29 | 30 | 31 |

51

49    48    52    53

# FIG_10

# FIG_12

# FIG_13

# FIG_16

## FIG_17a

| Sync | ACD | Numéro trame | ACD CRC | Canaux actifs concatenés | ⟩( | | Délimiteur | Bits bourrage |

## FIG_17b

| Sync | ACD | Numéro trame | ACD CRC | Canaux actifs concatenés | ⟩( | Délimiteur | Bits bourrage |

EP 1 376 958 B1

FIG_14

FIG_15

# FIG_18

# FIG_19

## FIG_21

## FIG_22

# FIG_20

cptr1=0

N

cptr1=0+1=1

700     b1

cptr1=0+1=1

cptr1=1-1=0

cptr1=1+1=2

I I I 0

I I I 0     b2

0 I I I

cptr2=0

701     cptr2=0-1=-1

cptr2=-1-1=-2

cptr2=-2+1=-1

cptr2=-1-1=-2

t